# EUROPEAN PATENT APPLICATION

(11) **EP 4 207 905 A1**
(43) Date of publication of application: **05.07.2023**
(21) Application number: 21876922.2
(22) Date of filing: 02.09.2021
(51) Int. Cl.: H04W 72/04

(54) **CHANNEL STATE MEASUREMENT METHOD AND RELATED DEVICE**

(30) Priority: 10.10.2020 CN 202011078491; 06.11.2020 CN 202011231929
(71) Applicant: Huawei Technologies Co., Ltd., Shenzhen, Guangdong 518129 (CN)
(72) Inventor: XUE, Yifan, Shenzhen, Guangdong 518129 (CN); KUANG, Yiru, Shenzhen, Guangdong 518129 (CN); XUE, Lixia, Shenzhen, Guangdong 518129 (CN); XU, Haibo, Shenzhen, Guangdong 518129 (CN)
(74) Representative: MERH-IP Matias Erny Reichl Hoffmann Patentanwälte PartG mbB
(86) International application number: PCT/CN2021/116125
(87) International publication number: WO 2022/073402

(57) **Abstract**

A channel state measurement method and a related device are disclosed, to resolve a problem of how to measure and report a channel state when two sets of DRX parameters are configured for a terminal. The method includes: in a time period between two consecutive times of reporting of CSI reports, determining, based on a status of a CSI-RS resource on a second frequency domain resource, whether a CSI report includes channel state information of the second frequency domain resource; or during reporting of a CSI report, determining whether reporting has been performed for the second frequency domain resource. If channel state information of the second frequency domain resource has been reported in a current DRX cycle, a current CSI report does not include channel state information of the second frequency domain resource; otherwise, a CSI report that currently needs to be reported needs to include channel state information of the second frequency domain resource. Alternatively, a terminal receives and measures a CSI-RS resource provided that the CSI-RS resource is within an active time of any frequency domain resource. Alternatively, CSI content included in a CSI report is indicated based on configuration information. This disclosure further provides a terminal.

## Description

This disclosure claims priority to Chinese Patent Application No. "CN202011078491.3", filed with the China National Intellectual Property Administration on October 10, 2020 and entitled "CHANNEL STATE MEASUREMENT METHOD", and Chinese Patent Application No. "CN202011231929.7", filed with the China National Intellectual Property Administration on November 6, 2020 and entitled "CHANNEL STATE MEASUREMENT METHOD AND RELATED DEVICE", which are incorporated herein by reference in their entireties.

### TECHNICAL FIELD

This disclosure relates to the communication field, and in particular, to a channel state measurement method and a related device.

### BACKGROUND

Discontinuous reception (discontinuous reception, DRX) is a mechanism for reducing power consumption of a terminal. The DRX mechanism enables the terminal to enter a sleep state sometimes. When the terminal is in the sleep state, the terminal does not listen to a physical downlink control channel (physical downlink control channel, PDCCH). When the terminal needs to listen to the PDCCH, the terminal wakes up from the sleep state. A time period in which the terminal is in a non-sleep state is shortened, to reduce power consumption of the terminal. After the DRX is configured for the terminal, the terminal listens to the PDCCH in on duration (on duration) of a DRX cycle. If the terminal detects a PDCCH used for scheduling newly transmitted data, the terminal starts or restarts an inactivity timer (inactivity timer). During running of the inactivity timer, the terminal still listens to the PDCCH. Therefore, a running time of an "on duration timer" and a running time of the "inactivity timer" are collectively referred to as an active time (active time).

The terminal receives a channel state information-reference signal (channel state information-reference signal, CSI-RS) within the active time, obtains a channel state information (channel state information, CSI) report (report) based on the CSI-RS, and sends the channel state information report to a network device. In the new radio (new radio, NR) Rel-16 standard, a secondary DRX (secondary DRX) mechanism is introduced, that is, the network device may configure two sets of DRX parameters for the terminal. One set of DRX parameters is used to constrain behavior of the terminal on a first frequency domain resource (for example, a first frequency range (frequency range 1, FR1)). The other set of DRX parameters is used to constrain behavior of the terminal on a second frequency domain resource (for example, a second frequency range (frequency range 2, FR2)).

The current version of the standard specifies only that, when the terminal reports the CSI report, the terminal can report channel state information when the terminal is within the active time. Before the secondary DRX is introduced, because behavior of the terminal in the FR1 and behavior of the terminal in the FR2 are constrained by a same set of DRX parameters, an active time of the FR1 is aligned with an active time of the FR2, and the terminal may report or not report both channel state information of the FR1 and channel state information of the FR2. However, with the introduction of the secondary DRX mechanism, an active time corresponding to the FR1 may not be aligned with an active time corresponding to the FR2. Therefore, when reporting the CSI report, the terminal may be within the active time of the FR1 but is beyond the active time of the FR2. In this case, how the terminal reports the CSI report becomes a problem that urgently needs to be resolved currently.

### SUMMARY

Embodiments of this disclosure provide a channel state measurement method and a related device. The method is used to resolve a problem of how a terminal measures and reports a channel state when a network device configures two sets of DRX parameters for the terminal.

According to a first aspect, an embodiment of this disclosure provides a channel state measurement method. The method is applied to a terminal. First, the terminal sends a channel state information report in a first time unit. Then the terminal sends a channel state information report in a second time unit. The first time unit and the second time unit are adjacent time units in which channel state information reports are reported. The first time unit is earlier than the second time unit. A first frequency domain resource corresponds to a first DRX parameter. A second frequency domain resource corresponds to a second DRX parameter. An active time of the second frequency domain resource is determined based on the second DRX parameter. In this embodiment, in a time period between two consecutive times of reporting of channel state information reports, the terminal determines, based on a status of a CSI-RS resource on the second frequency domain resource, whether a channel state information report includes channel state information of the second frequency domain resource. In a first case, when a reference signal exists between the first time unit and the second time unit, and the reference signal is on the second frequency domain resource and is within the active time of the second frequency domain resource, the channel state information report includes channel state information of the second frequency domain resource. In the first case, when a reference signal exists between the first time unit and the second time unit, and the reference signal is on the second frequency domain resource and is within the active time of the second frequency domain resource, the terminal needs to perform new measurement based on the reference signal. The channel state information report includes channel state information of the first frequency domain resource and the channel state information of the second frequency domain resource, to ensure that a network device obtains new channel state information to perform more accurate resource scheduling. In a second case, when a reference signal exists between the first time unit and the second time unit, and the reference signal is on the second frequency domain resource and is beyond an active time of the second frequency domain resource, or in a third case, when no reference signal exists between the first time unit and the second time unit, the channel state information report does not include channel state information of the second frequency domain resource. In the second case and the third case, the terminal can be prevented from repeatedly reporting channel state information of the second frequency domain resource, thereby avoiding redundant information transmission, saving uplink transmission resources, and improving transmission performance of uplink transmission resources. In this embodiment, in a time period between two consecutive times of reporting of CSI reports, the terminal determines, based on a status of a CSI-RS resource on the second frequency domain resource, whether a CSI report includes channel state information of the second frequency domain resource, thereby providing a method for the terminal to measure and report a channel state when two sets of DRX parameters are configured for the terminal.

In an optional implementation, the channel state information of the second frequency domain resource includes at least one of the following measurement items: a CQI, a PMI, an LI, an RI, a CRI, an SSBRI, an L1-RSRP, and an L1-SINR. The method in this embodiment may be used for all of the measurement items, or may be used for only some of the measurement items, and the method in this embodiment may be applied in different scenarios, thereby ensuring performance of different measurement items and also implementing flexibility.

In an optional implementation, the channel state information, included in the second channel state information report, of the second frequency domain resource is channel state information obtained based on last measurement performed on the second frequency domain resource before the second time unit, to ensure that the terminal reports latest channel state information of the second frequency domain resource, and enhance real-time performance of obtaining channel state information by the network device.

According to a second aspect, an embodiment of this disclosure provides a channel state measurement method, applied to a terminal.

First, the terminal receives first configuration information sent by a network device, where the first configuration information is used to configure a first DRX parameter of a first frequency domain resource and a second DRX parameter of a second frequency domain resource. Then the terminal sends a third channel state information report in a third time unit. In a first case, when a fourth channel state information report has been sent in a fourth time unit earlier than the third time unit and the fourth channel state information report includes channel state information of the second frequency domain resource, the third channel state information report does not include channel state information of the second frequency domain resource. In the first case, if channel state information of the second frequency domain resource has been reported in a same DRX cycle, a currently reported CSI report does not include channel state information of the second frequency domain resource. This prevents the terminal from repeatedly reporting channel state information of the second frequency domain resource, thereby avoiding redundant information transmission, saving uplink transmission resources, and improving transmission performance of uplink transmission resources. In a second case, when a fourth channel state information report has been sent in a fourth time unit and the fourth channel state information report does not include channel state information of the second frequency domain resource, no channel state information of the second frequency domain resource has been reported before current reporting. In this case, a currently reported CSI report includes channel state information of the second frequency domain resource, to ensure that the network device can obtain channel state information of the second frequency domain resource, thereby facilitating scheduling, beam management, and/or the like performed by the network device. In a third case, when the third time unit is the 1^{st} time unit, in a DRX cycle, in which a channel state information report is reported, the third channel state information report needs to include channel state information of the second frequency domain resource, to ensure that the network device can obtain channel state information of the second frequency domain resource, thereby facilitating scheduling, beam management, and/or the like performed by the network device.

According to a third aspect, an embodiment of this disclosure provides a channel state measurement method, applied to a terminal.

First, the terminal receives first configuration information sent by a network device, where the first configuration information is used to configure a first DRX parameter of a first frequency domain resource and a second DRX parameter of a second frequency domain resource. Then the terminal receives a reference signal on the second frequency domain resource, where the reference signal is within an active time of the first frequency domain resource and is beyond an active time of the second frequency domain resource, the active time of the first frequency domain resource is determined based on the first DRX parameter, and the active time of the second frequency domain resource is determined based on the second DRX parameter. It may be understood that, in this embodiment, a "union set" of the active time of the first frequency domain resource and the active time of the second frequency domain resource is used as the active time of the second frequency domain resource. The terminal receives and measures the reference signal provided that the reference signal is in the "union set". In this embodiment, an implementation of measuring a reference signal when a reference signal resource is beyond an active time of a frequency domain resource is determined.

In an optional implementation, further, the terminal sends a fifth channel state information report in a fifth time unit. The fifth channel state information report includes channel state information, obtained based on the reference signal, of the second frequency domain resource. The reference signal is a reference signal that is before the fifth time unit and that is closest to the fifth time unit. In this embodiment, the terminal measures the reference signal of the second frequency domain resource to obtain channel measurement information of the second frequency domain resource. Although the reference signal is beyond the active time of the second frequency domain resource, the reference signal is still within the active time of the first frequency domain resource. In this case, the terminal still receives and measures the reference signal. In addition, the fifth channel state information report reported in the fifth time unit includes channel state information of the first frequency domain resource and the channel state information of the second frequency domain resource. In this embodiment, the terminal may report latest channel state information, thereby enhancing real-time performance of obtaining channel state information by the network device, and facilitating scheduling and/or beam management performed by the network device.

According to a fourth aspect, an embodiment of this disclosure provides a channel state measurement method, applied to a terminal. First, the terminal receives second configuration information sent by a network device, where the second configuration information is used to indicate whether a sixth channel state information report includes channel state information of a second frequency domain resource. Then the terminal sends the sixth channel state information report in a sixth time unit, where the sixth time unit is beyond an active time of the second frequency domain resource. The second frequency domain resource corresponds to a second DRX parameter, and the active time of the second frequency domain resource is determined based on the second DRX parameter. Whether the sixth channel state information report includes channel state information of the second frequency domain resource is indicated based on the second configuration information. In this embodiment, configuration information is used to indicate CSI content included in a channel state information report. To be specific, the configuration information is used to indicate whether the channel state information report includes channel state information of the second frequency domain resource. The network device has higher flexibility, and the network device may determine reporting behavior of the terminal by using the second configuration information, thereby reducing determining steps performed by the terminal.

According to a fifth aspect, an embodiment of this disclosure provides a channel state measurement method, applied to a network device. First, the network device receives a first channel state information report in a first time unit, and then receives a second channel state information report in a second time unit. When a reference signal exists between the first time unit and the second time unit, and the reference signal is on a second frequency domain resource and is within an active time of the second frequency domain resource, the second channel state information report includes channel state information of the second frequency domain resource. When a reference signal exists between the first time unit and the second time unit, and the reference signal is on a second frequency domain resource and is beyond an active time of the second frequency domain resource, or when no reference signal exists between the first time unit and the second time unit, the second channel state information report does not include channel state information of the second frequency domain resource. A first frequency domain resource corresponds to a first DRX parameter, the second frequency domain resource corresponds to a second DRX parameter, and the active time of the second frequency domain resource is determined based on the second DRX parameter. The first time unit and the second time unit are adjacent (or consecutive) time units in which channel state information reports are reported, and the first time unit is earlier than the second time unit.

According to a sixth aspect, an embodiment of this disclosure provides a channel state measurement method, applied to a network device. First, the network device sends first configuration information to a terminal, where the first configuration information is used to configure a first DRX parameter of a first frequency domain resource and a second DRX parameter of a second frequency domain resource. Then the network device receives a third channel state information report in a third time unit. When a fourth channel state information report has been sent in a fourth time unit and the fourth channel state information report includes channel state information of the second frequency domain resource, the third channel state information report does not include channel state information of the second frequency domain resource, where the fourth time unit is earlier than the third time unit, and the fourth time unit and the third time unit are in a same DRX cycle. When a fourth channel state information report has been sent in a fourth time unit and the fourth channel state information report does not include channel state information of the second frequency domain resource, or when the third time unit is the 1^{st} time unit, in the DRX cycle, in which a channel state information report is reported, the third channel state information report includes channel state information of the second frequency domain resource.

According to a seventh aspect, an embodiment of this disclosure provides a channel state measurement method, applied to a network device. First, the network device sends first configuration information to a terminal, where the first configuration information is used to configure a first DRX parameter of a first frequency domain resource and a second DRX parameter of a second frequency domain resource. Then the network device sends, to the terminal, a reference signal on the second frequency domain resource, where the reference signal is within an active time of the first frequency domain resource and is beyond an active time of the second frequency domain resource, so that the terminal receives the reference signal. The active time of the first frequency domain resource is determined based on the first DRX parameter, and the active time of the second frequency domain resource is determined based on the second DRX parameter.

According to an eighth aspect, an embodiment of this disclosure provides a channel state measurement method, applied to a network device. First, the network device sends second configuration information to a terminal, where the second configuration information is used to indicate whether a sixth channel state information report includes channel state information of a second frequency domain resource. The network device receives, in a sixth time unit, the sixth channel state information report sent by the terminal, where the sixth time unit is beyond an active time of the second frequency domain resource. The second frequency domain resource corresponds to a second DRX parameter, and the active time of the second frequency domain resource is determined based on the second DRX parameter. Whether the sixth channel state information report includes channel state information of the second frequency domain resource is indicated based on the second configuration information.

According to a ninth aspect, an embodiment of this disclosure provides a terminal, including a transceiver.

The transceiver is configured to send a first channel state information report in a first time unit.

The transceiver is further configured to send a second channel state information report in a second time unit. When a reference signal exists between the first time unit and the second time unit, and the reference signal is on a second frequency domain resource and is within an active time of the second frequency domain resource, the second channel state information report includes channel state information of the second frequency domain resource.

When a reference signal exists between the first time unit and the second time unit, and the reference signal is on a second frequency domain resource and is beyond an active time of the second frequency domain resource, or when no reference signal exists between the first time unit and the second time unit, the second channel state information report does not include channel state information of the second frequency domain resource.

A first frequency domain resource corresponds to a first DRX parameter, the second frequency domain resource corresponds to a second DRX parameter, and the active time of the second frequency domain resource is determined based on the second DRX parameter.

The first time unit and the second time unit are adjacent time units in which channel state information reports are reported, and the first time unit is earlier than the second time unit.

According to a tenth aspect, an embodiment of this disclosure provides a terminal, including a transceiver.

The transceiver is configured to receive first configuration information sent by a network device, where the first configuration information is used to configure a first DRX parameter of a first frequency domain resource and a second DRX parameter of a second frequency domain resource.

The transceiver is further configured to send a third channel state information report in a third time unit. When a fourth channel state information report has been sent in a fourth time unit and the fourth channel state information report includes channel state information of the second frequency domain resource, the third channel state information report does not include channel state information of the second frequency domain resource, where the fourth time unit is earlier than the third time unit, and the fourth time unit and the third time unit are in a same DRX cycle.

When a fourth channel state information report has been sent in a fourth time unit and the fourth channel state information report does not include channel state information of the second frequency domain resource, or when the third time unit is the 1^{st} time unit, in the DRX cycle, in which a channel state information report is reported, the third channel state information report includes channel state information of the second frequency domain resource.

According to an eleventh aspect, an embodiment of this disclosure provides a terminal, including a transceiver.

The transceiver is configured to receive first configuration information sent by a network device, where the first configuration information is used to configure a first DRX parameter of a first frequency domain resource and a second DRX parameter of a second frequency domain resource.

The transceiver is further configured to receive a reference signal on the second frequency domain resource. The reference signal is within an active time of the first frequency domain resource and is beyond an active time of the second frequency domain resource. The active time of the first frequency domain resource is determined based on the first DRX parameter, and the active time of the second frequency domain resource is determined based on the second DRX parameter.

In an optional implementation, the transceiver is further configured to send a fifth channel state information report in a fifth time unit. The fifth channel state information report includes channel state information, obtained based on the reference signal, of the second frequency domain resource. The reference signal is a reference signal that is before the fifth time unit and that is closest to the fifth time unit.

According to a twelfth aspect, an embodiment of this disclosure provides a terminal, including a transceiver.

The transceiver is configured to receive second configuration information sent by a network device, where the second configuration information is used to indicate whether a sixth channel state information report includes channel state information of a second frequency domain resource.

The transceiver is further configured to send the sixth channel state information report in a sixth time unit, where the sixth time unit is beyond an active time of the second frequency domain resource. The second frequency domain resource corresponds to a second DRX parameter, and the active time of the second frequency domain resource is determined based on the second DRX parameter. Whether the sixth channel state information report includes channel state information of the second frequency domain resource is indicated based on the second configuration information.

According to a thirteenth aspect, an embodiment of this disclosure provides a computer-readable storage medium. The computer-readable storage medium is configured to store a computer program. When the computer program runs on a computer, the computer is enabled to perform the method according to any one of the first aspect to the fourth aspect, or the computer is enabled to perform the method according to any one of the fifth aspect to the eighth aspect.

According to a fourteenth aspect, an embodiment of this disclosure provides a chip, including a processor and a communication interface. The processor is configured to read instructions to perform the method according to any one of the first aspect to the fourth aspect, or the processor is configured to read instructions to perform the method according to any one of the fifth aspect to the eighth aspect.

### BRIEF DESCRIPTION OF DRAWINGS

FIG. 1 is a schematic diagram of DRX according to an embodiment of this disclosure;
FIG. 2 is a schematic diagram of an active time in DRX according to an embodiment of this disclosure;
FIG. 3A is a schematic diagram of an example in which a PUCCH is within an active time and a CSI-RS2 is beyond the active time according to an embodiment of this disclosure;
FIG. 3B is a schematic diagram of an example in which a PUCCH is beyond an active time and a CSI-RS1 is within the active time according to an embodiment of this disclosure;
FIG. 4 is a schematic diagram of an example in which an active time of a first frequency domain resource is not aligned with an active time of a second frequency domain resource according to an embodiment of this disclosure;
FIG. 5 is a schematic diagram of an example in which an active time of a first frequency domain resource is not aligned with an active time of a second frequency domain resource, and a DRX cycle of the second frequency domain resource includes a short cycle according to an embodiment of this disclosure;
FIG. 6A is a schematic diagram of an example of a communication system according to an embodiment of this disclosure;
FIG. 6B is a schematic diagram of another example of a communication system according to an embodiment of this disclosure;
FIG. 7 is a schematic flowchart of steps of Embodiment 1 of a channel state measurement method according to an embodiment of this disclosure;
FIG. 8A, FIG. 8B, FIG. 8C, and FIG. 8D are schematic diagrams of scenarios of a plurality of examples of channel state information measurement and reporting according to Embodiment 1 of this disclosure;
FIG. 9 is a schematic flowchart of steps of determining, by a terminal, CSI content included in a second channel state information report according to Embodiment 1 of this disclosure;
FIG. 10 is a schematic flowchart of steps of Embodiment 2 of a channel state measurement method according to an embodiment of this disclosure;
FIG. 11A, FIG. 11B, and FIG. 11C are schematic diagrams of scenarios of a plurality of examples of channel state information measurement and reporting according to Embodiment 2 of this disclosure;
FIG. 12 is a schematic flowchart of steps of determining, by a terminal, CSI content included in a channel state information report reported in a third time unit according to Embodiment 2 of this disclosure;
FIG. 13 is a schematic flowchart of steps of Embodiment 3 of a channel state measurement method according to an embodiment of this disclosure;
FIG. 14A and FIG. 14B are schematic diagrams of scenarios of two examples of channel state information measurement and reporting according to Embodiment 3 of this disclosure;
FIG. 15A and FIG. 15B are schematic flowcharts of steps of two examples of determining, by a terminal, to receive a reference signal according to Embodiment 3 of this disclosure;
FIG. 16 is a schematic flowchart of steps of Embodiment 4 of a channel state measurement method according to an embodiment of this disclosure;
FIG. 17 is a schematic diagram of a structure of an example of an apparatus according to an embodiment of this disclosure; and
FIG. 18 is a schematic diagram of a structure of another example of an apparatus according to an embodiment of this disclosure.

### DESCRIPTION OF EMBODIMENTS

The following describes technical solutions in embodiments of this disclosure with reference to accompanying drawings in embodiments of this disclosure. The term "and/or" in this disclosure describes only an association relationship for describing associated objects and represents that three relationships may exist. For example, A and/or B may represent the following three cases: Only A exists, both A and B exist, and only B exists. In addition, the character "/" in this disclosure generally indicates an "or" relationship between the associated objects. In the specification, claims, and accompanying drawings of this disclosure, the terms "first", "second", and the like are intended to distinguish between similar objects but do not necessarily indicate a specific order or sequence. It should be understood that the terms used in this way are interchangeable in appropriate circumstances, so that embodiments described herein can be implemented in an order other than the order illustrated or described herein. In addition, the terms "comprise", "include", and any variants are intended to cover a non-exclusive inclusion. For example, a process, method, system, product, or device that includes a list of steps or modules is not necessarily limited to those steps or modules that are expressly listed, but may include other steps or modules that are not expressly listed or are inherent to the process, method, product, or device.

For better understanding of this disclosure, terms used in this disclosure are described first.

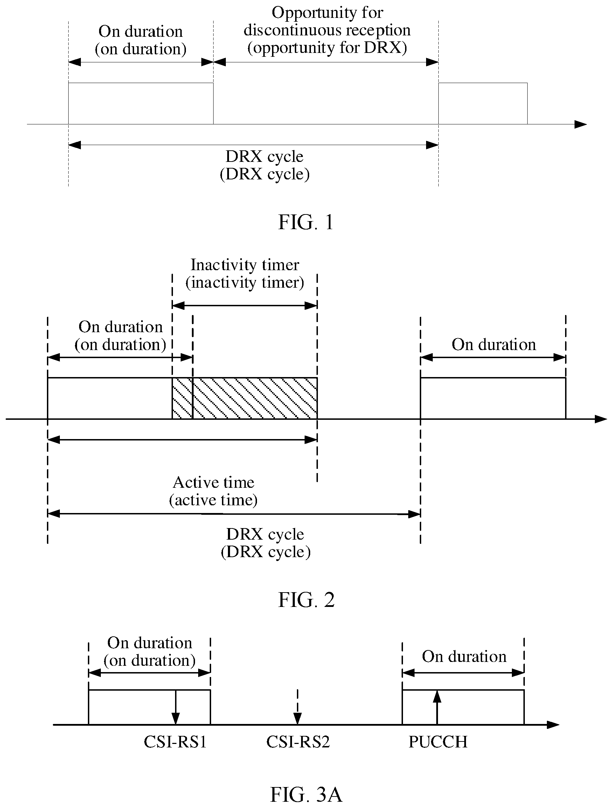

First, DRX is described as follows:
A network device may configure DRX for a terminal in a connected state. As shown in FIG. 1, in time domain, time is divided into consecutive DRX cycles (DRX cycle). Each DRX cycle includes on duration (on duration) and an opportunity for discontinuous reception (opportunity for DRX). The terminal listens to a PDCCH within a time of the "on duration". In the "opportunity for DRX", the terminal does not listen to the PDCCH, and is in off duration.

As shown in FIG. 2, after DRX is configured for the terminal, the terminal starts an on duration timer (on duration timer) based on a DRX parameter (for example, a long cycle and an offset (offset)) configured by the network device. During running of the "on duration timer", the terminal is in on duration (on duration), and the terminal listens to a PDCCH in on duration (on duration) of a DRX cycle. If the terminal detects a PDCCH used for scheduling newly transmitted data, the terminal starts or restarts an inactivity timer (inactivity timer). During running of the "inactivity timer", the terminal still listens to the PDCCH. A running time of the on duration timer (on duration timer) and a running time of the inactivity timer may be collectively referred to as an active time (active time). When carrier aggregation (carrier aggregation, CA) is configured for the terminal, behavior of the terminal in all cells (cell) is controlled by DRX. The behavior of the terminal herein is "channel state information (channel state information, CSI) measurement and reporting". The all cells include a primary cell and a secondary cell, or the all cells include only a primary cell or a secondary cell. The primary cell is a cell configured to maintain a connection between the network device and the terminal. The secondary cell is a cell configured to increase a transmission rate or a throughput.

Next, CSI measurement and reporting are described as follows:
A network device sends a CSI-RS to a terminal, where the CSI-RS is used for the terminal to perform channel state measurement. The terminal performs measurement based on the CSI-RS to obtain a channel state information report (CSI report), and reports the channel state information report to the network device. The network device may perform scheduling, beam management, and/or the like based on the CSI report reported by the terminal. The method in this disclosure is applicable to periodic (periodic) and semi-persistent (semi-persistent) CSI measurement and reporting.

Still next, CSI measurement and reporting performed by a terminal in combination with DRX are described as follows:
In a CA scenario, a network device configures a CSI-RS resource for each cell. Different CSI-RS resources may be configured for different cells, and the CSI-RS resources of the cells are independent of each other and do not affect each other. For periodic and semi-persistent CSI measurement and reporting, the terminal receives CSI-RSs in a plurality of cells within an active time of DRX, and sends a CSI report. In other words, if a CSI-RS is beyond the active time, the terminal may not receive or measure the CSI-RS. The network device configures a physical uplink control channel (physical uplink control channel, PUCCH) (or physical uplink shared channel (physical uplink shared channel, PUSCH)) resource for the terminal, and the terminal reports a CSI report by using the PUCCH (or PUSCH) resource. The PUCCH resource is preconfigured by using an RRC message. The PUSCH resource is scheduled by using downlink control information (downlink control information, DCI). In embodiments of this disclosure, an example in which an uplink transmission resource is a PUCCH is used.

When the terminal needs to send a CSI report, the terminal sends, to the network device, last measured channel state information as content of the CSI report. As shown in FIG. 3A, a down arrow indicates a CSI-RS, and an up arrow indicates a physical uplink control channel (physical uplink control channel, PUCCH) (or a physical uplink shared channel (physical uplink shared channel, PUSCH)) that carries a CSI report. A CSI-RS1 is within the active time, and the terminal receives and measures the CSI-RS 1. However, a CSI-RS2 is beyond the active time, and the terminal does not receive the CSI-RS2. When the terminal needs to send a CSI report in the PUCCH, content of the CSI report is obtained through measurement based on the CSI-RS1, and the terminal does not measure the CSI-RS2.

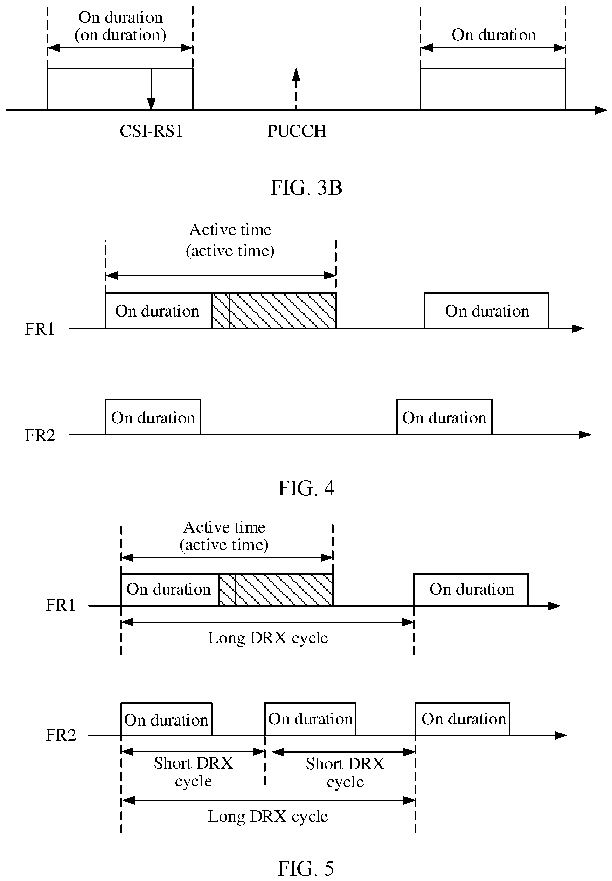

In addition, if the PUCCH (or the PUSCH) that carries the CSI report is beyond the active time, the terminal does not send the CSI report. For example, as shown in FIG. 3B, because the PUCCH is beyond the active time, the terminal does not send the CSI report to a base station. In this case, although the CSI-RS 1 is within the active time (for example, on duration), because the terminal may predetermine that the terminal is not to send a CSI report, the terminal may not measure the CSI-RS 1 when predetermining that the terminal is not to send a CSI report. If the terminal cannot predetermine that the terminal is not to send a CSI report, the terminal usually measures the CSI-RS 1 and obtains channel state information.

In addition, in the CA scenario, the network device usually configures a PUCCH resource in a primary cell (primary cell, PCell). To be specific, the terminal receives CSI-RSs and measures the CSI-RSs in a plurality of cells, but the terminal reports channel state information of each cell to the network device by using the primary cell.

Finally, content of channel state information is described.

The channel state information may include the following measurement items: a channel quality indicator (channel quality indicator, CQI), a precoding matrix indicator (precoding matrix indicator, PMI), a CSI-RS resource indicator (CSI-RS resource indicator, CRI), a synchronization signal block resource indicator (synchronization signal block resource indicator, SSBRI), a layer indicator (layer indicator, LI), a rank indicator (rank indicator, RI), layer 1-reference signal received power (layer 1-reference signal received power, L1-RSRP), and a layer 1-signal to interference plus noise ratio (layer 1-signal to interference plus noise ratio, L1-SINR). The CQI, the PMI, the LI, and the RI are usually used for a base station to schedule data transmission more efficiently. The CRI, the SSBRI, the L1 - RSRP, and the L1-SINR are usually used for the base station to obtain signal strength for beam management.

In NR Rel-15 and earlier standards, even if a plurality of cells (cell) are configured for a terminal in a CA scenario, behavior of the terminal in each cell is constrained by a same set of DRX parameters, and the behavior of the terminal in each cell is the same. However, in NR Rel-16, to further reduce power consumption of a terminal, a secondary DRX (secondary DRX) mechanism is introduced into the NR Rel-16 standard. To be specific, a network device may configure two sets of DRX parameters for one terminal.

Specific content of configuration of the two sets of DRX parameters is described as follows:

### 1. Configuration of a DRX parameter of a frequency domain resource

The network device may configure two sets of DRX parameters for one terminal. For example, the network device may send configuration information to the terminal. The configuration information is used to configure a first DRX parameter for a first frequency domain resource, and configure a second DRX parameter for a second frequency domain resource. The frequency domain resource may be a frequency range. The first frequency domain resource may also be referred to as a first frequency range (frequency range 1, FR1). The second frequency domain resource may also be referred to as a second frequency range (frequency range 2, FR2). For example, the FR1 corresponds to a frequency of 7.225 GHz or lower, and the FR2 corresponds to a frequency of 24.250 GHz or higher.

The two sets of DRX parameters are completely different, or the first DRX parameter and the second DRX parameter are not completely the same. For example, in the two sets of DRX parameters, some parameters are the same, and some parameters are different. The DRX parameter includes but is not limited to an on duration timer (on duration timer), an inactivity timer (inactivity timer), a retransmission timer (retransmission timer), a short cycle timer (short cycle timer), a short cycle (short cycle), and a long cycle (long cycle). The long cycle is an integer multiple of the short cycle. For example, long cycles in the two sets of DRX parameters are the same, and specific parameters, among other parameters, that are the same or different are not limited. For example, the FR1 and the FR2 have different "on duration timers", the FR1 and the FR2 have different "inactivity timers", and the FR1 and the FR2 have different "short cycle timers". In addition, the FR1 and the FR2 have a same "retransmission timer", and the FR1 and the FR2 have a same "long cycle".

DRX parameters of the FR1 and DRX parameters of the FR2 do not affect each other. For example, an on duration timer and an inactivity timer may be configured for the FR1 and the FR2 respectively. A length of an active time of the FR2 may be less than a length of an active time of the FR1. In addition, an inactivity timer of the FR1 and an inactivity timer of the FR2 are separately triggered to start. To be specific, when the terminal receives a PDCCH in the FR1, only the inactivity timer of the FR1 is started (or restarted), and the inactivity timer of the FR2 is not affected. On the contrary, when the terminal receives a PDCCH in the FR2, only the inactivity timer of the FR2 is started (or restarted), and the inactivity timer of the FR1 is not affected. For another example, a short cycle timer may be configured for each of the FR1 and the FR2. When the short cycle timer expires, a short cycle is switched to a long cycle. The network device may further send a media access control-control element (media access control-control element, MAC CE) to control switching between a "long cycle" and a "short cycle" in the FR1 (or the FR2).

### 2. Configuration of each cell on a frequency domain resource

In a CA scenario, a quantity of cells configured in the FR1 and a quantity of cells configured in the FR2 are not limited. For example, four cells are used as an example. One cell is configured in the FR1, that is, one cell is within a frequency range corresponding to the FR1; and three cells are configured in the FR2, that is, three cells are within a frequency range corresponding to the FR2. Alternatively, two cells are configured in the FR1, and two cells are configured in the FR2. A frequency domain resource on which a primary cell is configured and a frequency domain resource on which a secondary cell is configured are not limited. For example, a primary cell (for example, a cell-1) and one secondary cell (for example, a cell-2) may be configured in the FR1, and two secondary cells (for example, a cell-3 and a cell-4) may be configured in the FR2. The cell-1, the cell-2, the cell-3, and the cell-4 are all serving cells of the terminal.

The FR1 corresponds to one set of DRX parameters (the first DRX parameter), and the FR2 corresponds to the other set of DRX parameters (the second DRX parameter). To be specific, all the cells in the FR1 are configured by using the first DRX parameter, and all the cells in the FR2 are configured by using the second DRX parameter. The cells in the FR1 form a DRX group (DRX group). In other words, the cells in the FR1 belong to a same DRX group, that is, a cell group that uses the first DRX parameter. Similarly, the cells in the FR2 also form a DRX group. In other words, the cells in the FR2 belong to a same DRX group, that is, a cell group that uses the second DRX parameter. The DRX group in the FR1 includes the cell-1 and the cell-2, and the DRX group in the FR2 includes the cell-3 and the cell-4. It may be understood that, because a frequency of the FR1 is lower than a frequency of the FR2 and an attenuation characteristic of an electromagnetic wave is that a higher frequency leads to greater attenuation, signal attenuation in the FR1 is weaker than that in the FR2, and therefore a cell coverage area in the FR1 is larger than that in the FR2. Usually, the primary cell carries important functions such as signaling interaction (for example, uplink control information (UCI)) and radio link management. To ensure that a connection between the terminal and the network device can be well maintained, the network device usually configures a primary cell in the FR1, and configures a PUCCH in the primary cell. The terminal reports a CSI report to the network device by using the primary cell, to ensure quality of CSI.

With reference to the descriptions in the foregoing case 1, configuration of the DRX parameters of the FR1 may be understood as configuration of the DRX group in the FR1, and configuration of the DRX parameters of the FR2 may be understood as configuration of the DRX group in the FR2. In this disclosure, measurement on the FR1 is equivalent to measurement on the DRX group in the FR1 or measurement on a cell in the DRX group in the FR1, and measurement on the FR2 is equivalent to measurement on the DRX group in the FR2 or measurement on a cell in the DRX group in the FR2.

### 3. That the active time of the FR1 is "not aligned" with the active time of the FR2 is described as follows:

For example, duration of on duration timers (and/or inactivity timers) of the FR1 and the FR2 is set separately, the "inactivity timers" are triggered separately for the two FRs, and the "inactivity timers" of the two FRs do not affect each other. Therefore, the active time of the FR1 is quite possibly not aligned with the active time of the FR2. As shown in FIG. 4 and FIG. 5, lengths of "on duration" of the FR1 and the FR2 are different. The terminal receives a PDCCH in the FR1, and therefore the "inactivity timer" in the FR1 is started to run. However, the terminal does not receive a PDCCH in the FR2, and therefore the "inactivity timer" in the FR2 is not started. As a result, the "active time" of the FR1 is not aligned with the "active time" of the FR2.

In the example shown in FIG. 4 in which only a "long cycle" is included, that the active times are "not aligned" may mean that start time units of the active time of the FR1 and the active time of the FR2 are the same, but end time units of the active times are different.

In another example, when a "short cycle" is started for one of the FR1 and the FR2, as shown in FIG. 5, a DRX cycle of the FR2 includes a short cycle, and that the active times are "not aligned" may mean that start time units of the active time of the FR1 and the active time of the FR2 are the same, but end time units of the active times are different; or start time units of the active time of the FR1 and the active time of the FR2 are different, and end time units of the active times are also different; or start time units of the active time of the FR1 and the active time of the FR2 are different, but end time units of the active times are the same.

It should be noted that, for ease of description, FIG. 4 shows only a "long cycle", but does not show a "short cycle". Herein, that the active time of the FR1 may not be aligned with the FR2 because two sets of DRX parameters exist is mainly described, and whether a DRX cycle includes a "short cycle" is not limited.

A current standard specifies that a terminal reports a CSI report only when a PUCCH (or a PUSCH) used to carry a CSI report is within an active time. The existing standard does not specify how a terminal measures and reports channel state information for a DRX group without a PUCCH resource when a network device configures two sets of DRX parameters for the terminal and the two sets of DRX parameters respectively correspond to different frequency domain resources.

Embodiments of this disclosure provide a channel state measurement method. The method is used to resolve a problem of how a terminal measures and reports a channel state when a network device configures two sets of DRX parameters for the terminal.

The method is applied to a communication system. The communication system includes but is not limited to a 4th generation (4th generation, 4G) communication system, a 5G communication system, a 6G communication system, a system integrating a plurality of communication systems, or a future evolved communication system, for example, a long term evolution (long term evolution, LTE) system, an NR system, a 3rd generation partnership project (3rd generation partnership project, 3GPP)-related communication system, or another communication system of this type.

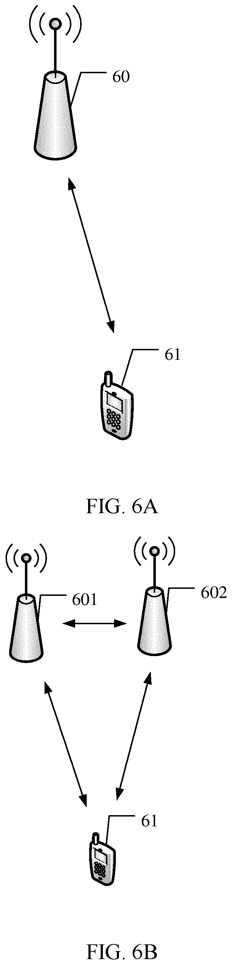

As shown in FIG. 6A, the communication system includes a network device 60 and a terminal 61, and the network device 60 is communicatively connected to the terminal 61. The network device 60 configures two sets of DRX parameters for the terminal 61. The network device 60 sends a CSI-RS to the terminal 61, where the CSI-RS is used to trigger the terminal 61 to perform channel state measurement. The terminal 61 performs measurement based on the CSI-RS to obtain a CSI report, and reports the CSI report to the network device 60.

In this disclosure, the network device includes but is not limited to an evolved NodeB (NodeB, or eNB or e-NodeB, evolved NodeB) in LTE, a gNodeB (gNodeB or gNB) or a transmission reception point (transmission receiving point/transmission reception point, TRP) in NR, a future evolved 3 GPP base station, a wireless relay node, a wireless backhaul node, and the like. The base station may be a macro base station, a micro base station, a relay station, or the like. A plurality of base stations may support the foregoing networks using a same technology, or may support the foregoing networks using different technologies. The base station may include one or more co-site or non-co-site TRPs. Alternatively, the network device may be a radio controller, a centralized unit (centralized unit, CU), and/or a distributed unit (distributed unit, DU) in a cloud radio access network (cloud radio access network, CRAN) scenario. In embodiments of this disclosure, for example, the network device is a base station.

In an example, the network device is a base station including a radio frequency unit, a baseband processing unit, and a central processing unit with a scheduling function. In a CA scenario, the terminal is connected to one base station. The base station may cover a plurality of cells.

In another example, as shown in FIG. 6B, the communication system may alternatively include a plurality of network devices and a terminal, and the plurality of network devices include a first network device 601 and a second network device 602. The first network device 601 and the second network device 602 may be connected to each other in a specific manner, to perform scheduling coordinately, so that a plurality of cells can operate coordinately through CA. In a CA scenario, the first network device 601 is communicatively connected to the second network device 602, the first network device 601 performs resource scheduling, the terminal 61 may be communicatively connected to a plurality of network devices, and the plurality of network devices cover a plurality of serving cells.

In this disclosure, the terminal may be a mobile phone (mobile phone), a tablet computer (Pad), a computer with a wireless transceiver function, a virtual reality (virtual reality, VR) terminal, an augmented reality (augmented reality, AR) terminal, a terminal in industrial control (industrial control), a vehicle-mounted terminal, a terminal in self-driving (self driving), a terminal in assisted driving, a terminal in remote medical (remote medical), a terminal in a smart grid (smart grid), a terminal in transportation safety (transportation safety), a terminal in a smart city (smart city), a terminal in a smart home (smart home), or the like. An application scenario is not limited in embodiments of this disclosure. The terminal sometimes may also be referred to as a terminal, user equipment (user equipment, UE), a UE unit, a UE station, a mobile station, a mobile console, a remote station, a remote terminal, a mobile device, a UE terminal, a wireless communication device, a machine terminal, a UE agent, a UE apparatus, or the like. In embodiments of this disclosure, for example, the terminal may be a mobile phone.

In this disclosure, an uplink transmission resource (a PUCCH or a PUSCH) is configured or indicated in an FR1, and the terminal reports CSI to the network device by using the PUCCH or the PUSCH in the FR1. The PUCCH or the PUSCH is within an active time of the FR1, and the active time of the FR1 is longer than an active time of an FR2. Because the PUCCH or the PUSCH is within the active time of the FR1, a CSI report reported by the terminal includes at least channel state information of the FR1. In embodiments of this disclosure, more focus is placed on how to report channel state information of the FR2. The following describes, by using specific embodiments, a channel state measurement method provided in this disclosure.

It should be noted that the "active time of the FR1" in embodiments of this disclosure means that the network device configures a first DRX parameter for the FR1, a DRX group that uses the first DRX parameter is in the FR1, and the terminal is within an active time in the FR1 based on a DRX mechanism. In other words, in this disclosure, the "active time of the FR1" means that the terminal is within an active time in the FR1. Similarly, the active time of the "FR2" means that the network device configures a second DRX parameter for the FR2, a DRX group that uses the second DRX parameter is in the FR2, and the terminal is within an active time in the FR2 based on the DRX mechanism. In other words, in this disclosure, the "active time of the FR2" means that the terminal is within an active time in the FR2.

### Embodiment 1

In this embodiment, in a time period between two consecutive times of reporting of CSI reports, a terminal determines, based on a status of a CSI-RS resource in an FR2, whether a CSI report includes channel state information of the FR2.

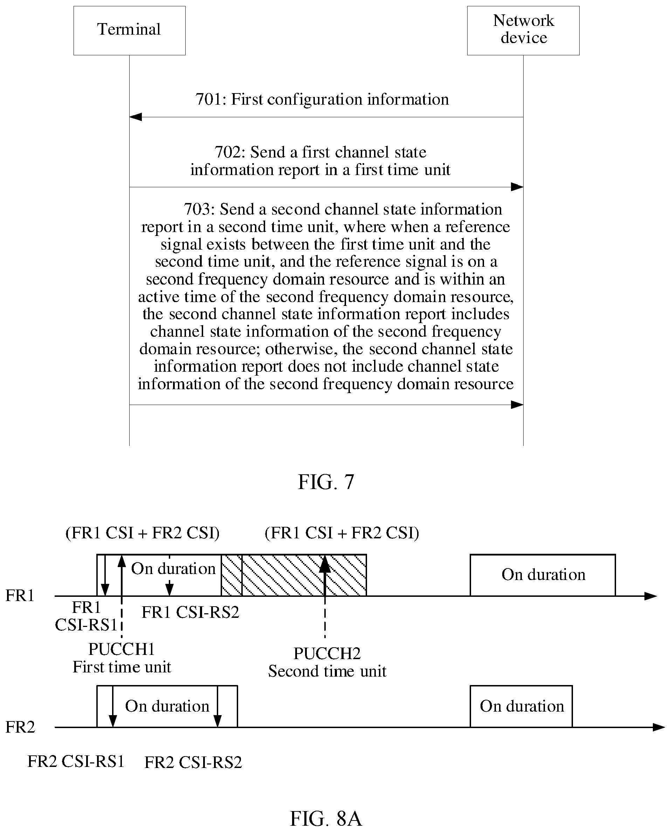

As shown in FIG. 7, an embodiment of a channel state measurement method provided in this disclosure includes the following steps.

Step 701: A network device sends first configuration information to a terminal. Correspondingly, the terminal receives the first configuration information sent by the network device. The first configuration information is used to configure a first DRX parameter for a first frequency domain resource, and configure a second DRX parameter for a second frequency domain resource.

The first configuration information may be carried in a radio resource control (radio resource control, RRC) message, for example, an RRC connection setup (RRC Connection Setup) message, an RRC connection reconfiguration (RRC connection reconfiguration) message, or an RRC connection reestablishment (RRC Connection Reestablishment) message. Specifically, the first configuration information may be MAC-CellGroupConfig (including drx-Config and drx-ConfigSecondaryGroup), where the drx-Config is used to configure the first DRX parameter, and the drx-ConfigSecondaryGroup is used to configure the second DRX parameter.

In this embodiment of this disclosure, DRX parameters are described by using an "on duration timer", an "inactivity timer", and a "long cycle" as examples. A "long cycle" of an FR1 is the same as a "long cycle" of an FR2. The terminal may determine an active time of the FR1 based on an "on duration timer" and an "inactivity timer" of the FR1, and determine an active time of the FR2 based on an "on duration timer" and an "inactivity timer" of the FR2. In this embodiment of this disclosure, an example in which the active time of the FR1 is longer than the active time of the FR2 is used for description.

It may be understood that, that the network device configures the first DRX parameter for the first frequency domain resource is equivalent to configuring the first DRX parameter for one or more first cells that use the first frequency domain resource, where the one or more first cells are a first DRX group; and configuring the second DRX parameter for the second frequency domain resource is equivalent to configuring the second DRX parameter for one or more second cells that use the second frequency domain resource, where the one or more second cells are a second DRX group.

In this embodiment of this disclosure, for ease of description, measurement on the FR1 is measurement on the first DRX group, where this is not described below again; and measurement on the FR2 is measurement on the second DRX group, where this not described below again.

Step 702: The terminal sends a first channel state information report in a first time unit. Correspondingly, the network device receives the first channel state information report in the first time unit.

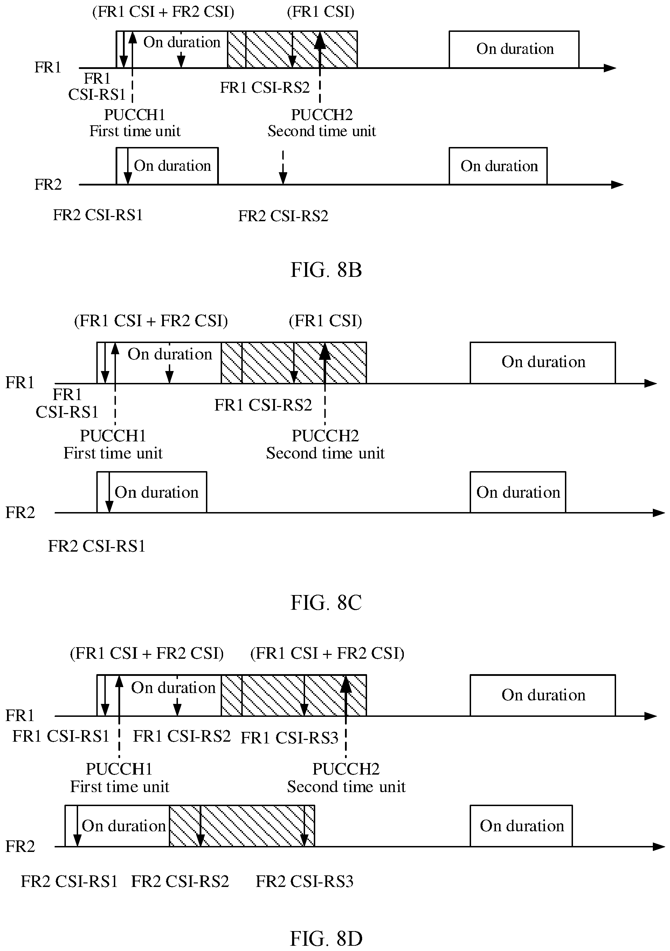

As shown in FIG. 8A and FIG. 8B, the first DRX parameter is configured for a DRX group in the FR1, the second DRX parameter is configured for a DRX group in the FR2, CSI-RS resources (indicated by a down arrow in FIG. 8A and FIG. 8B) are configured in both DRX groups, and a PUCCH resource (indicated by an up arrow in FIG. 8A and FIG. 8B) is configured in a PCell of the FR1. A CSI-RS resource exists in each of "on duration" of the FR1 and "on duration" of the FR2. In this disclosure, to distinguish between CSI-RSs, a CSI-RS on the first frequency domain resource is denoted as an "FR1 CSI-RS", and a CSI-RS on the second frequency domain resource is denoted as an "FR2 CSI-RS". In addition, to distinguish between different CSI-RSs on the first frequency domain resource, different CSI-RSs on the first frequency domain resource are denoted as an "FR1 CSI-RS1" and an "FR1 CSI-RS2". Similarly, different CSI-RSs on the second frequency domain resource are denoted as an "FR2 CSI-RS 1" and an "FR2 CSI-RS2". Details are not described below again.

An "FR1 CSI-RS1" resource exists in the "on duration" of the FR1, and an "FR2 CSI-RS1" resource exists in the "on duration" of the FR2. Before the first time unit, the first reference signal of the FR1 (FR1 CSI-RS 1) and the first reference signal of the FR2 (FR2 CSI-RS1) are within the active time. Therefore, the terminal receives and measures the first reference signal of the FR1 (FR1 CSI-RS 1) and the first reference signal of the FR2 (FR2 CSI-RS1), to obtain channel state information of the FR1 and channel state information of the FR2. A PUCCH1 is within the active time (active time) of the FR1, and the terminal sends the first channel state information report by using a first uplink resource (for example, the PUCCH1) in the first time unit. The first channel state information report includes the channel state information of the FR1 and the channel state information of the FR2.

Step 703: The terminal sends a second channel state information report in a second time unit. Correspondingly, the network device receives the second channel state information report in the second time unit.

The terminal sends the second channel state information report in the second time unit by using a second uplink resource (for example, a PUCCH2). As shown in FIG. 8A and FIG. 8B, when the terminal receives a PDCCH in the "on duration" of the FR1, the terminal starts the "inactivity timer". A running time of the "inactivity timer" is indicated by a "shadow" in FIG. 8A and FIG. 8B. The PUCCH2 is within the running time of the "inactivity timer", and the PUCCH2 is within the active time (active time) of the FR1. The first time unit and the second time unit are adjacent (or consecutive) time units in which channel state information reports are reported twice, and the first time unit is earlier than the second time unit. For example, in a same DRX cycle, the first time unit is a time unit in which a CSI report is reported for the first time, and the second time unit is a time unit in which a CSI report is reported for the second time. The terminal does not perform reporting behavior between the first time unit and the second time unit. In this example, it only needs to be ensured that the first time unit and the second time unit are adjacent time units in which channel state information reports are reported twice, and which time of reporting is specifically performed by the first time unit is not limited.

In this example, whether a currently reported CSI report includes channel state information of the FR2 is determined by comprehensively considering a status of a CSI-RS resource in the FR2 in a time period in which CSI reports are reported twice consecutively. In a first case, as shown in FIG. 8A, for the FR1, an "FR1 CSI-RS2" resource exists in a time period in which the terminal reports CSI reports twice adjacently, the "FR1 CSI-RS2" resource is within the active time of the FR1, and the terminal measures the "FR1 CSI-RS2" to obtain channel state information of the FR1. For the FR2, when an "FR2 CSI-RS2" resource exists and the "FR2 CSI-RS2" is within the active time of the FR2, the terminal measures the "FR1 CSI-RS2" to obtain channel state information of the FR2. In the first case, when a reference signal (CSI-RS) exists between the first time unit and the second time unit, and the reference signal (FR2 CSI-RS2) is on the second frequency domain resource and is within an active time of the second frequency domain resource, the terminal needs to perform new measurement based on the FR2 CSI-RS2, and the second channel state information report includes the channel state information of the FR1 and the channel state information of the FR2. In this way, new channel state information of the FR1 and the FR2 is reported in the second time unit, to ensure that the network device obtains the new channel state information to perform more accurate resource scheduling.

Between the first time unit and the second time unit, for the FR2, if the terminal does not perform new measurement, the terminal does not report channel state information of the FR2, as described in the following second case and third case.

In the second case, as shown in FIG. 8B, for the FR1, when an "FR1 CSI-RS2" exists between the first time unit and the second time unit, and the "FR1 CSI-RS2" is within the active time, the terminal measures the "FR1 CSI-RS2" to obtain channel state information of the FR1. For the FR2, when an "FR2 CSI-RS2" resource exists but the "FR2 CSI-RS2" is beyond the active time (that is, not within the active time), a CSI report reported by the terminal includes the channel state information of the FR1, but does not include channel state information of the FR2.

In the third case, as shown in FIG. 8C, when no reference signal of the FR2 (FR2 CSI-RS2) exists in a time period in which CSI reports are reported twice adjacently (consecutively), that is, the terminal does not perform new measurement on the FR2 between the first time unit and the second time unit, the second channel state information report includes only channel state information of the FR1, but does not include channel state information of the FR2. In the third case, channel state information of the FR2 has been reported in the first time unit, and when the terminal does not perform new measurement on the FR2, a CSI report reported by the terminal does not include channel state information of the FR2. In this embodiment, in the second case and the third case, the terminal does not perform new measurement on the FR2 and therefore does not need to report channel state information of the FR2, because reporting channel state information of the FR2 is equivalent to reporting the channel state information measured based on the FR2 CSI-RS1 again. Therefore, in the second case and the third case, the terminal does not report channel state information of the FR2. This can prevent the terminal from repeatedly reporting channel state information of the FR2, thereby avoiding redundant information transmission, saving uplink transmission resources, and improving transmission performance of uplink transmission resources.

Optionally, in this embodiment, measurement items of channel state information in a CSI report may include at least one of the following: a CQI, a PMI, an LI, an RI, a CRI, an SSBRI, an L1-RSRP, and an L1-SINR. The method in this embodiment may be used for all of the measurement items, or may be used for only some of the measurement items. The terminal reports the CSI report to the network device, and the network device performs operations related to scheduling adjustment, beam management, and/or the like based on reported content.

Optionally, as shown in FIG. 8D, in a same DRX cycle, one or more CSI-RS resources exist in the FR2 between the first time unit and the second time unit. For example, a plurality of CSI-RS resources include an FR2 CSI-RS2 resource and an FR2 CSI-RS3 resource, and both the FR2 CSI-RS2 resource and the FR2 CSI-RS3 resource are within the active time. A time-domain location of the FR2 CSI-RS2 is before a time-domain location of the FR2 CSI-RS3. The terminal measures the FR2 CSI-RS2 and the FR2 CSI-RS3 to obtain channel state information, but, channel state information, included in the CSI report reported by the terminal, of the second frequency domain resource is channel state information obtained based on last measurement performed on the second frequency domain resource before the second time unit (that is, obtained by performing measurement based on the FR2 CSI-RS3). In this way, it is ensured that the terminal reports latest channel state information of the FR2, thereby enhancing real-time performance of obtaining channel state information by the network device.

It may be understood that, in this disclosure, a PUCCH may be within the active time of the FR1, but is beyond the active time of the FR2. For example, a length of the on duration of the FR1 is different from a length of the on duration of the FR2. As a result, the active time of the FR1 is not aligned with the active time of the FR2. Alternatively, the terminal receives a PDCCH in the FR1, and the "inactivity timer" corresponding to the FR1 is started to run, but the terminal does not receive a PDCCH in the FR2, and therefore the "inactivity timer" in the FR2 is not started. As a result, the "active time" of the FR1 is not aligned with the "active time" of the FR2.

When the active time of the FR1 is not aligned with the active time of the FR2, a PUCCH may be within the active time of the FR1, but is beyond the active time of the FR2. Alternatively, a CSI-RS resource is within an active time of one FR (for example, the FR1), and is beyond an active time of another FR (for example, the FR2). When the active time of the FR1 is not aligned with the active time of the FR2, in this embodiment of this disclosure, a problem of how the terminal measures and reports channel state information in a DRX group without a PUCCH resource is resolved.

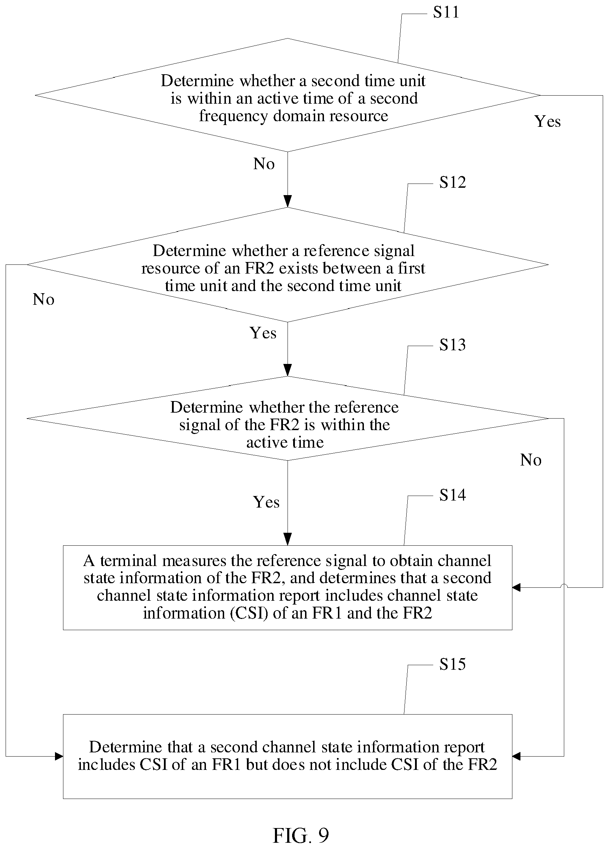

For example, as shown in FIG. 9, that the terminal determines, based on a status of a CSI-RS resource in the FR2, whether to report channel state information of the FR2 may include the following steps.

S11: Determine whether the second time unit is within the active time of the second frequency domain resource. When the second time unit is beyond the active time of the second frequency domain resource, step S12 is performed. When the second time unit is within the active time of the second frequency domain resource, step S14 is performed.

The second time unit is a time unit in which a CSI report is reported, and is preconfigured by the network device by using an RRC message. The terminal may determine the active time of the FR2 based on the second DRX parameter (for example, the "on duration timer" and the "inactivity timer"). Further, the terminal may determine whether the second time unit is beyond the active time of the second frequency domain resource.

S12: Determine whether a reference signal resource of the FR2 (FR2 CSI-RS2) exists between the first time unit and the second time unit. When it is determined that an "FR2 CSI-RS2" resource exists between the first time unit and the second time unit, step S13 is performed. When it is determined that no "FR2 CSI-RS2" resource exists between the first time unit and the second time unit, step S15 is performed.

The terminal may receive, in advance, first indication information sent by the network device. The first indication information is used to indicate a CSI-RS resource set of the FR2 (or the first indication information is used to indicate CSI-RS resource sets of the FR1 and the FR2). The CSI-RS resource set may include at least one CSI-RS resource. A time-domain location of an "FR2 CSI-RS" in the CSI-RS resource set may be determined based on the first indication information. Then it is determined whether a CSI-RS resource of the FR2 falls within a time period between the first time unit and the second time unit. If a CSI-RS resource of the FR2 (for example, an FR2 CSI-RS2) in the CSI-RS resource set is located between the first time unit and the second time unit, it is determined that a second reference signal resource of the FR2 exists between the first time unit and the second time unit.

S13: When an "FR2 CSI-RS2" resource exists between the first time unit and the second time unit, continue to determine whether the reference signal of the FR2 "FR2 CSI-RS2" is within the active time. When the "FR2 CSI-RS2" is within the active time, step S14 is performed. When the "FR2 CSI-RS2" is beyond the active time, step S15 is performed.

The active time of the FR2 may be determined based on the second DRX parameter. In step S12, a time-domain location of the FR2 CSI-RS2 may be determined, and then whether the "FR2 CSI-RS2" is within the active time is further determined.

S14: When the "FR2 CSI-RS2" is within the active time, the terminal needs to measure the FR2 CSI-RS2 to obtain channel state information of the FR2, where the second channel state information report includes channel state information (CSI) of the FR1 and the FR2.

S15: When the "FR2 CSI-RS2" is beyond the active time, the second channel state information report includes channel state information of the FR1, but does not include channel state information of the FR2.

The example corresponding to FIG. 9 is merely an example for description for ease of understanding, and is not construed as a limitation on this disclosure. For example, S11, S12, and S13 may alternatively be performed in one step; or S11 and S12 may be performed in one step; or S12 and S13 are performed in one step.

It may be understood that, in this embodiment, after receiving a CSI report reported by the terminal, the network device also needs to determine CSI content included in the CSI report, for example, whether the CSI report includes only channel state information of the FR1 or includes channel state information of the FR1 and the FR2. The network device can correctly parse the CSI report by using a corresponding method only after correctly determining the content included in the CSI report. The network device and the terminal maintain a same determining rule. To be specific, the network device also determines, based on the foregoing three cases, whether the CSI report includes channel state information of the FR2. Details are not described herein again.

### Embodiment 2

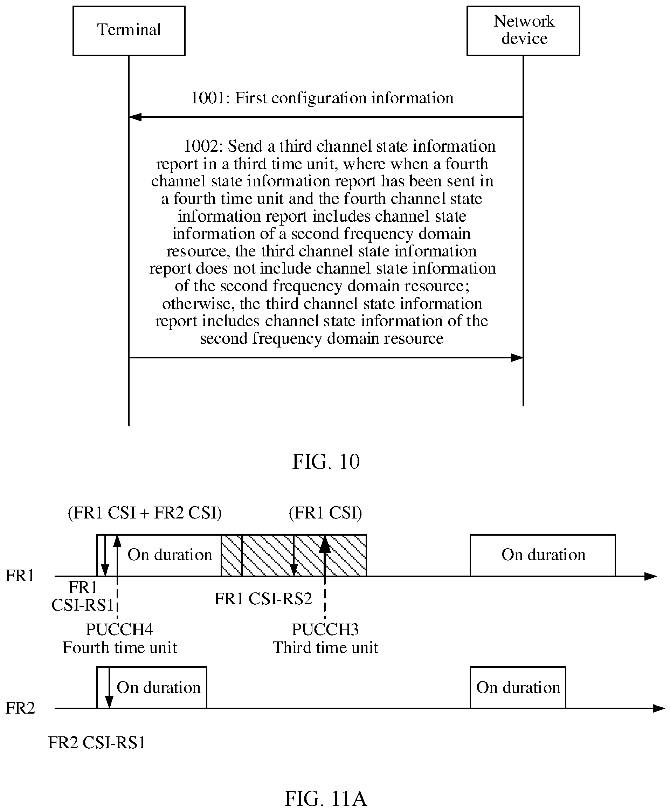

As shown in FIG. 10, an embodiment of this disclosure provides another embodiment of a channel state measurement method. In this embodiment, when reporting a CSI report in a current DRX cycle, a terminal determines whether reporting has been performed for an FR2. If channel state information of the FR2 has been reported in the current DRX cycle, the current CSI report does not include channel state information of the FR2; otherwise, the CSI report that currently needs to be reported needs to include channel state information of the FR2.

Step 1001: A network device sends first configuration information to a terminal. Correspondingly, the terminal receives the first configuration information sent by the network device. The first configuration information is used to configure a first DRX parameter of a first frequency domain resource and a second DRX parameter of a second frequency domain resource.

For this step, refer to the descriptions of step 701 in the embodiment corresponding to FIG. 7. Details are not described herein again.

Step 1002: The terminal sends a third channel state information report in a third time unit. Correspondingly, the network device receives the third channel state information report in the third time unit.

The third time unit is within an active time of an FR1, and the third time unit is beyond an active time of an FR2. The terminal determines an active time of the second frequency domain resource based on the second DRX parameter. The terminal determines an active time of the first frequency domain resource based on the first DRX parameter.

CSI content in the third channel state information report (CSI report) may include the following several cases.

In a first case, as shown in FIG. 11A, in a same DRX cycle, when a fourth channel state information report has been sent in a fourth time unit by using a fourth uplink resource (for example, a PUCCH4) and the fourth channel state information report includes channel state information of the FR2 (for example, channel state information measured based on an FR2 CSI-RS1), and when the terminal sends the third channel state information report in the third time unit by using a third uplink resource (for example, a PUCCH3), the third channel state information report includes only channel state information of the FR1, but does not include channel state information of the FR2. The fourth time unit is earlier than the third time unit. In the first case, if channel state information of the FR2 has been reported in a same DRX cycle, a currently reported CSI report does not include channel state information of the FR2. This prevents the terminal from repeatedly reporting channel state information of the FR2, thereby avoiding redundant information transmission, saving uplink transmission resources, and improving transmission performance of uplink transmission resources.

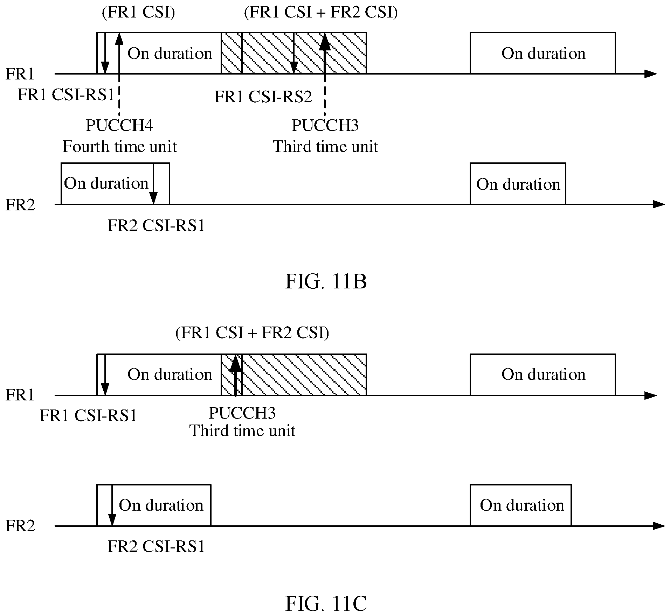

In a second case, when a fourth channel state information report has been sent in a fourth time unit and the fourth channel state information report does not include channel state information of the second frequency domain resource, the third channel state information report includes channel state information of the FR2. As shown in FIG. 11B, in an example, before the fourth time unit, an FR1 CSI-RS 1 is received and measured in the FR1, but there is no CSI-RS resource of the FR2. In this case, the fourth channel state information report includes only channel state information of the FR1, and does not include channel state information of the FR2. That is, for the FR2, no channel state information is reported in a current DRX cycle. However, if the terminal receives and measures an FR2 CSI-RS 1 between the fourth time unit and the third unit, to obtain channel state information of the FR2, a currently reported CSI report needs to include channel state information of the FR2 (for example, the channel state information measured based on the FR2 CSI-RS1). In this embodiment, in a same DRX cycle, if no channel state information of the FR2 has been reported before current reporting, a currently reported CSI report includes channel state information of the FR2, to ensure that the network device can obtain channel state information of the FR2 at least once in one DRX cycle, thereby facilitating scheduling, beam management, and the like performed by the network device.

In a third case, when the third time unit is the 1^{st} time unit, in a DRX cycle, in which a channel state information report is reported, the third channel state information report includes channel state information of the second frequency domain resource.

As shown in FIG. 11C, before the third time unit, when the FR1 CSI-RS1 is within an active time of the FR1 and the FR2 CSI-RS 1 is within the active time of the FR2, the terminal receives and measures the FR1 CSI-RS 1 and the FR2 CSI-RS1, to obtain channel state information of the FR1 and the FR2. In the third case, when the third time unit is a time unit in which a CSI report is reported for the first time in a current DRX cycle, the third channel state information report includes channel state information of the FR1 and the FR2, to ensure that the network device can obtain channel state information of the FR2, thereby facilitating scheduling, beam management, and the like performed by the network device.

Compared with a stipulation in an existing standard, in this embodiment, UE reports CSI only when a PUCCH (or a PUSCH) is within an active time. Therefore, the terminal does not report channel state information of the FR2 when a PUCCH (or PUSCH) is beyond the active time of the FR2. Still as shown in FIG. 11C, when a PUCCH3 (or PUSCH) resource is beyond on duration of the FR2, a CSI report does not include channel measurement information of the FR2. If no scheduling information (namely, a PDCCH) is received in the FR2, no "inactivity timer" is started in the FR2, and therefore the PUCCH resource is beyond the active time of the FR2. In this case, to obtain channel state information of the FR2, the network device intentionally configures an on duration timer of the FR2 to be long, so that the PUCCH resource can be within the on duration of the FR2. This imposes a limitation on configuration of the network device. Alternatively, to obtain channel state information of the FR2, the network device specially sends scheduling information to schedule an empty packet, to start an inactivity timer in the FR2 and extend the active time of the FR2, so that the PUCCH resource can be within the on duration of the FR2. This causes an unnecessary waste of resources, and extending the active time of the FR2 also increases power consumption of the terminal in the FR2. However, according to the method in this embodiment of this disclosure, a length of the on duration timer of the FR2 may be flexibly configured, thereby reducing a limitation on configuration of the network device.

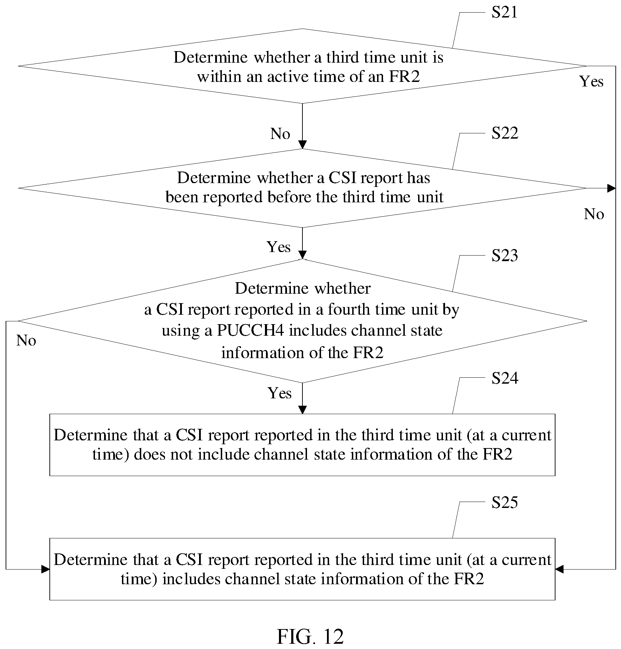

For example, as shown in FIG. 12, in a current DRX cycle, before current reporting of a CSI report, that the terminal determines, based on a reporting status of channel state information of the FR2, whether to report channel state information of the FR2 may include the following steps.

S21: Determine whether the third time unit is within the active time of the FR2. When the third time unit is beyond the active time of the FR2, step S22 is performed. When the third time unit is within the active time of the FR2, step S25 is directly performed.

S22: Determine whether a CSI report has been reported before the third time unit. When a CSI report has been reported before the third time unit (that is, the third time unit is not a time unit in which reporting is performed for the first time), step S23 is performed. When no CSI report has been reported before the third time unit (that is, the third time unit is a time unit in which reporting is performed for the first time), step S25 is directly performed.

S23: When determining that a CSI report has been reported before the third time unit (in the fourth time unit), the terminal continues to determine whether a CSI report reported in the fourth time unit by using the PUCCH4 includes channel state information of the FR2. When it is determined that the CSI report reported in the fourth time unit includes channel state information of the FR2 (that is, channel state information has been reported for the FR2), step S24 is performed. When it is determined that the CSI report reported in the fourth time unit does not include channel state information of the FR2, step S25 is performed.

S24: A CSI report reported (this time) in the third time unit does not include channel state information of the FR2.

S25: A CSI report reported (this time) in the third time unit includes channel state information of the FR2.

The example corresponding to FIG. 12 is merely an example for description for ease of understanding, and is not construed as a limitation on this disclosure. For example, S21 and S22 may alternatively be performed in one step.

Optionally, in this embodiment, measurement items of channel state information in a CSI report may include at least one of the following: a CQI, a PMI, an LI, an RI, a CRI, an SSBRI, an L1-RSRP, and an L1-SINR. The method in this embodiment may be used for all of the measurement items, or may be used for only some of the measurement items. The terminal reports the CSI to the network device, and the network device performs operations related to scheduling adjustment and/or beam management based on reported content. For example, in this embodiment, measurement items used for beam management, such as the CRI, the SSBRI, the L1-RSRP, and the L1-SINR, may be included. To enable a base station to select a beam suitable for communicating with the terminal, a CSI report needs to be reported at least once in each DRX cycle. In the method in this embodiment, if the terminal determines that no CSI has been reported for the FR2 in a current DRX cycle, the terminal needs to report channel state information of the FR2 to the network device. If the terminal determines that CSI has been reported for the FR2 in a current DRX cycle, the terminal may not report channel state information of the FR2, to reduce redundant information in reporting.

Optionally, in a same DRX cycle, when one or more CSI-RS resources exist in the FR2 before the third time unit, and the one or more CSI-RS resources are all within the active time, the channel state information, included in the third channel state information report, of the second frequency domain resource is channel state information obtained based on last measurement performed on the second frequency domain resource before the third time unit.

It may be understood that, in this embodiment, after receiving a CSI report reported by the terminal, the network device also needs to determine CSI content included in the CSI report, for example, whether the CSI report includes only channel state information of the FR1 or includes channel state information of the FR1 and channel state information of the FR2. The network device can correctly parse the CSI report by using a corresponding method only after correctly determining the content included in the CSI report. When the network device determines that no CSI has been received for the FR2 in a current DRX cycle, the CSI report includes channel state information of the FR1 and the FR2. If the network device determines that CSI has been received for the FR2 in a current DRX cycle, the CSI report includes channel state information of the FR1, but does not include channel state information of the FR2.

### Embodiment 3

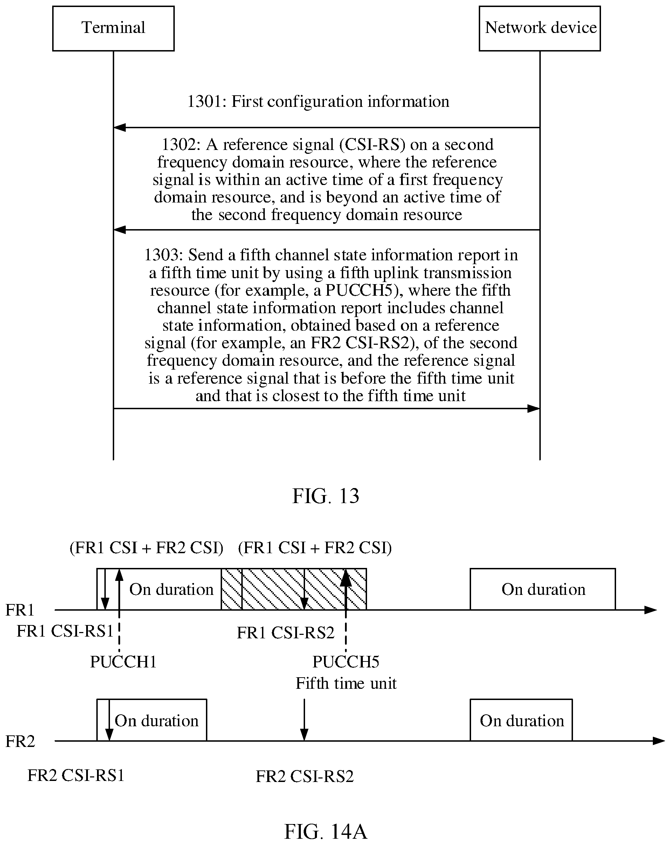

As shown in FIG. 13, an embodiment of this disclosure provides another embodiment of a channel state measurement method. In this embodiment, a terminal receives and measures a CSI-RS resource provided that the CSI-RS resource is within an active time of any FR. For example, even if a CSI-RS resource of an FR2 is beyond an active time of the FR2, the terminal receives and measures the CSI-RS provided that the CSI-RS resource of the FR2 is within an active time of an FR1. For another example, even if a CSI-RS resource of an FR1 is beyond an active time of the FR1, the terminal receives and measures the CSI-RS provided that the CSI-RS resource of the FR1 is within an active time of an FR2.

Step 1301: A network device sends first configuration information to a terminal. Correspondingly, the terminal receives the first configuration information sent by the network device, where the first configuration information is used to configure a first DRX parameter of a first frequency domain resource and a second DRX parameter of a second frequency domain resource.

For this step, refer to the descriptions of step 701 in the embodiment corresponding to FIG. 7. Details are not described herein again.

Step 1302: The network device sends a CSI-RS of an FR2. Correspondingly, the terminal receives a reference signal (CSI-RS) on a second frequency domain resource, where the reference signal is within an active time of a first frequency domain resource, and is beyond an active time of the second frequency domain resource.

As shown in FIG. 14A, in an example, an active time of an FR1 is longer than an active time of the FR2. Before a fifth time unit, the terminal has reported a CSI report once, and the CSI report includes channel state information obtained through measurement based on an FR2 CSI-RS 1. A time-domain location of an FR2 CSI-RS2 is after a time-domain location of the FR2 CSI-RS 1. It is important that when the FR2 CSI-RS2 is beyond the active time of the FR2 but the FR2 CSI-RS2 is within the active time of the FR1, the terminal still receives and measures the FR2 CSI-RS2, to obtain channel state information of the FR2. It should be noted that, in FIG. 14A, although the fifth time unit is described by using a time of the second reporting as an example, which time of reporting in the DRX cycle is specifically performed by the fifth time unit is not limited. For example, the fifth time unit may alternatively be a time unit in which reporting is performed for the first time in the DRX cycle.

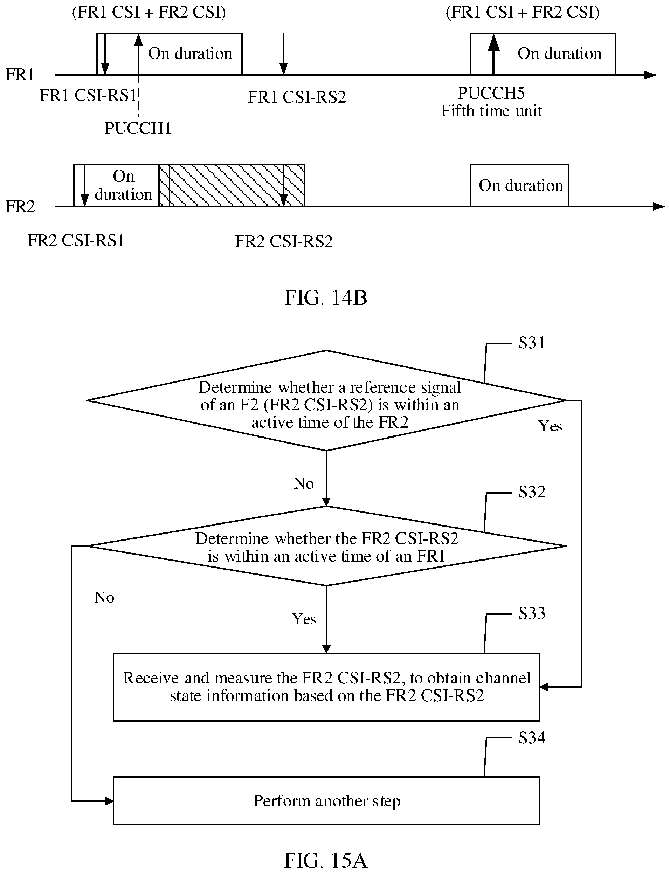

For example, as shown in FIG. 15A, a step of determining, by the terminal, whether to receive the FR2 CSI-RS2 may include the following steps.

S31: Determine whether a reference signal of the FR2 (FR2 CSI-RS2) is within the active time of the FR2. If it is determined that the FR2 CSI-RS2 is beyond the active time of the FR2, step S32 is performed. If the terminal determines that the FR2 CSI-RS2 is within the active time of the FR2, step S33 is directly performed.

S32: Determine whether the FR2 CSI-RS2 is within the active time of the FR1. If it is determined that the FR2 CSI-RS2 is within the active time of the FR1, step S33 is performed. If it is determined that the FR2 CSI-RS2 is beyond the active time of the FR1, step S34 is performed.

S33: Receive and measure the FR2 CSI-RS2, to obtain channel state information based on the FR2 CSI-RS2.

S34: Perform another step.

As shown in FIG. 14B, in another example, an active time of the FR2 is longer than an active time of an FR1. When an FR1 CSI-RS2 is beyond the active time of the FR1 but the FR1 CSI-RS2 is within the active time of the FR2, the terminal still receives and measures the FR1 CSI-RS2, to obtain channel state information of the FR1. The terminal may report channel state information of the FR1 and channel state information of the FR2 in a next DRX cycle.

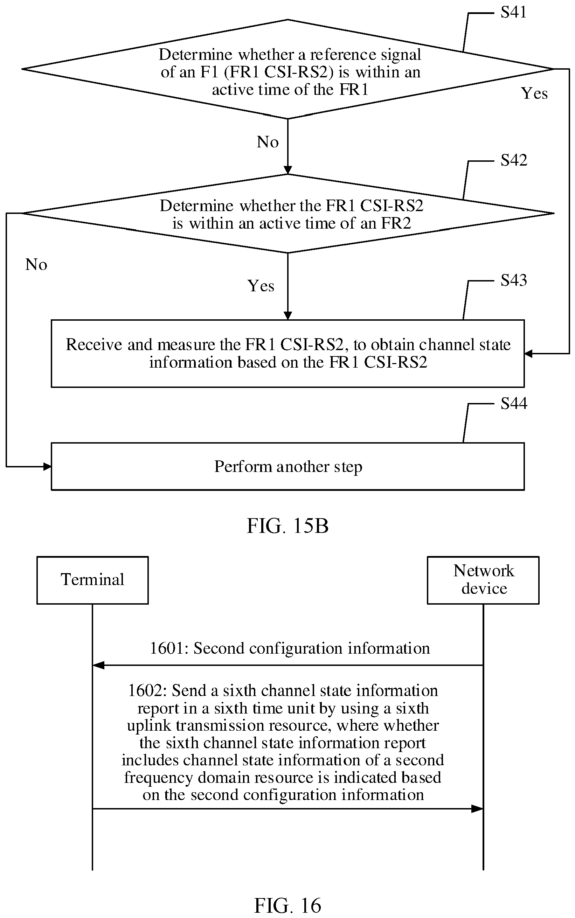

For example, as shown in FIG. 15B, a step of determining, by the terminal, whether to receive the FR1 CSI-RS2 may include the following steps.

S41: Determine whether a reference signal of the FR1 (FR1 CSI-RS2) is within the active time of the FR1. If it is determined that the FR1 CSI-RS2 is beyond the active time of the FR1, step S32 is performed. If the terminal determines that the FR1 CSI-RS2 is within the active time of the FR1, step S43 is directly performed.

S42: Determine whether the FR1 CSI-RS2 is within the active time of the FR2. If it is determined that the FR1 CSI-RS2 is within the active time of the FR2, step S43 is performed. If it is determined that the FR1 CSI-RS2 is beyond the active time of the FR2, step S44 is performed.

S43: Receive and measure the FR1 CSI-RS2, to obtain channel state information based on the FR1 CSI-RS2.

S44: Perform another step.

It should be noted that the examples corresponding to FIG. 15A and FIG. 15B are merely examples for description for ease of understanding, and are not construed as a limitation on this disclosure. For example, in the example corresponding to FIG. 15A, S31 and S32 may alternatively be performed in one step; and in the example corresponding to FIG. 15B, S41 and S42 may alternatively be performed in one step. This is not specifically limited.

Step 1303: The terminal sends a fifth channel state information report in the fifth time unit by using a fifth uplink transmission resource (for example, a PUCCH5). Correspondingly, the network device receives the fifth channel state information report in the fifth time unit.

The fifth channel state information report includes channel state information, obtained based on a reference signal (for example, the FR2 CSI-RS2), of the second frequency domain resource. The reference signal is a reference signal that is before the fifth time unit and that is closest to the fifth time unit.

It may be understood that, in this embodiment, a "union set" of the active time of the FR1 and the active time of the FR2 is used as the active time of the FR2. Provided that the FR2 CSI-RS2 is in the "union set", the terminal receives and measures the FR2 CSI-RS2, to obtain channel measurement information of the FR2. To be specific, if the FR2 CSI-RS2 is beyond the active time of the FR2 but is still within the active time of the FR1, the terminal still receives and measures the FR2 CSI-RS2. In addition, the fifth channel state information report (CSI report) reported in the fifth time unit includes channel state information of the FR1 and the FR2.

In this embodiment, the terminal may report latest channel state information, thereby enhancing real-time performance of obtaining channel state information by the network device, and facilitating scheduling and/or beam management performed by the network device.

Optionally, in this embodiment, measurement items of channel state information in a CSI report may include at least one of the following: a CQI, a PMI, an LI, an RI, a CRI, an SSBRI, an L1-RSRP, and an L1-SINR. The method in this embodiment may be used for all of the measurement items, or may be used for only some of the measurement items. The terminal reports the CSI to the network device, and the network device performs operations related to scheduling adjustment and/or beam management based on reported content.

It may be understood that, in this embodiment, after receiving a CSI report reported by the terminal, the network device also needs to determine CSI content included in the CSI report, for example, whether the CSI report includes only channel state information of the FR1 or includes channel state information of the FR1 and channel state information of the FR2. The network device can correctly parse the CSI report by using a corresponding method only after correctly determining the content included in the CSI report. When determining that the FR2 CSI-RS2 is beyond the active time of the FR2, the network device determines whether the FR2 CSI-RS2 is within the active time of the FR1. When the FR2 CSI-RS2 is within the active time of the FR1, the network device determines that the CSI report received in the fifth time unit includes channel state information of the FR1 and the FR2.

### Embodiment 4

As shown in FIG. 16, an embodiment of this disclosure provides another embodiment of a channel state measurement method. In this embodiment, CSI content included in a CSI report is indicated by using configuration information. To be specific, whether the CSI report includes channel state information of an FR2 is indicated by using the configuration information.

Step 1601: A terminal receives first configuration information and second configuration information that are sent by a network device. Correspondingly, the network device sends the first configuration information and the second configuration information.

The first configuration information is used to configure a first DRX parameter for a first frequency domain resource, and configure a second DRX parameter for a second frequency domain resource.

The terminal may determine an active time of an FR2 based on the second DRX parameter.

For descriptions of the first configuration information, refer to the descriptions of step 701 in the embodiment corresponding to FIG. 7.

The second configuration information is used to indicate whether a sixth channel state information report includes channel state information of the second frequency domain resource. The second configuration information may be configured by using an RRC parameter or a MAC CE.

The second configuration information includes first information or second information. The first information is used to indicate that a CSI report reported by the terminal needs to carry channel state information of the FR2. The second information is used to indicate that a CSI report reported by the terminal does not need to carry channel state information of the FR2.

Step 1602: The terminal sends the sixth channel state information report in a sixth time unit by using a sixth uplink transmission resource. Correspondingly, the network device receives the sixth channel state information report in the sixth time unit.

The sixth time unit is beyond an active time of the second frequency domain resource. Whether the sixth channel state information report includes channel state information of the second frequency domain resource is indicated based on the second configuration information. For example, when the second configuration information includes the first information, the sixth channel state information report includes channel state information of an FR1 and channel state information of the FR2. When the second configuration information includes the second information, the sixth channel state information report includes channel state information of the FR1, but does not include channel state information of the FR2.

In this embodiment, the terminal first determines whether the sixth time unit is within the active time of the FR2. When the terminal determines that the sixth time unit is beyond the active time of the FR2, the terminal determines CSI content in the sixth channel state information report based on the second configuration information. In this embodiment, the network device has higher flexibility, and the network device may determine reporting behavior of the terminal by using the second configuration information, thereby reducing determining steps performed by the terminal.

Optionally, in this embodiment, measurement items of channel state information in a CSI report may include at least one of the following: a CQI, a PMI, an LI, an RI, a CRI, an SSBRI, an L1-RSRP, and an L1-SINR. The method in this embodiment may be used for all of the measurement items, or may be used for only some of the measurement items. The terminal reports the CSI to the network device, and the network device performs operations related to scheduling adjustment and/or beam management based on reported content.

Optionally, when one or more CSI-RS resources exist in the FR2 and the one or more CSI-RS resources are within the active time of the FR2, the terminal receives and measures the one or more CSI-RS resources. The terminal determines to use, as to-be-reported channel state information of the FR2, channel state information obtained through last measurement performed on the second frequency domain resource in the sixth time unit. In other words, channel state information, included in the sixth channel state information report, of the second frequency domain resource is the channel state information obtained through last measurement performed on the second frequency domain resource before the sixth time unit.

In this embodiment of this disclosure, the methods in the foregoing different embodiments may be used for different measurement items. For example, channel state information used to assist a base station in scheduling, for example, measurement items such as the PMI, the RI, and the CQI, may be measured and reported by using the method in Embodiment 1; and channel state information used for beam management, for example, measurement items such as the CRI, the SSBRI, the L1-RSRP, and the L1-SINR, may be measured and reported by using the method in Embodiment 3. Methods in different embodiments may be applied in different scenarios, thereby ensuring performance of different measurement items and also implementing flexibility.

Corresponding to the methods provided in the foregoing method embodiments, an embodiment of this disclosure further provides a corresponding apparatus, including corresponding modules configured to perform the foregoing embodiments. The module may be software, hardware, or a combination of software and hardware.

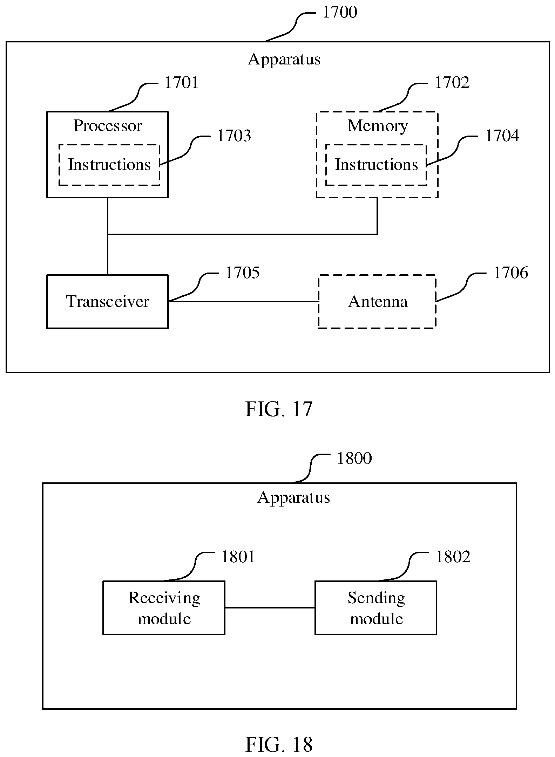

FIG. 17 is a schematic diagram of a structure of an apparatus. The apparatus 1700 may be a network device, may be a terminal, may be a chip, a chip system, a processor, or the like that supports a network device in implementing the foregoing methods, or may be a chip, a chip system, a processor, or the like that supports a terminal in implementing the foregoing methods. The apparatus may be configured to implement the methods described in the foregoing method embodiments. For details, refer to the descriptions in the foregoing method embodiments.

The apparatus 1700 may include one or more processors 1701, and may implement a specific control function. The processor 1701 may be a general-purpose processor, a dedicated processor, or the like. For example, the processor 1701 may be a baseband processor or a central processing unit. The baseband processor may be configured to process a communication protocol and communication data. The central processing unit may be configured to control a communication apparatus (for example, a base station, a baseband chip, a terminal, a terminal chip, a DU, or a CU), execute a software program, and process data of the software program.

In an optional design, the processor 1701 may alternatively store instructions 1703, and the instructions 1703 may be executed by the processor, so that the apparatus 1700 performs the methods described in the foregoing method embodiments.

In another optional design, the processor 1701 may include a transceiver unit configured to implement a receiving function and a sending function. For example, the transceiver unit may be a transceiver circuit, an interface, or an interface circuit. A transceiver circuit, an interface, or an interface circuit configured to implement the receiving function and that configured to implement the sending function may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 1700 may include a circuit. The circuit may implement a sending, receiving, or communication function in the foregoing method embodiments.

Optionally, the apparatus 1700 may include one or more memories 1702. The memory 1702 may store instructions 1704. The instructions may be run on the processor, so that the apparatus 1700 performs the methods described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 1700 may further include a transceiver 1705 and/or an antenna 1706. The processor 1701 may be referred to as a processing unit, and controls the apparatus 1700. The transceiver 1705 may be referred to as a transceiver unit, a transceiver device, a transceiver circuit, a transceiver apparatus, a transceiver module, or the like, and is configured to implement a receiving function and a sending function.

For example, in this disclosure, when the apparatus is a terminal, the transceiver 1705 is configured to perform the method performed by the terminal in step 701 to step 703 in the foregoing method embodiment 1, is further configured to perform the method performed by the terminal in step 1001 and step 1002 in the foregoing method embodiment 2, is further configured to perform the method performed by the terminal in step 1301 to step 1303 in the foregoing method embodiment 3, and is further configured to perform the method performed by the terminal in step 1601 and step 1602 in the foregoing method embodiment 4. The processor 1701 is configured to perform the method performed by the terminal in steps S11 to S15 in the foregoing method embodiment 1, is further configured to perform the method performed by the terminal in steps S21 to S25 in the foregoing method embodiment 2, and is further configured to perform the method performed by the terminal in steps S31 to S34 in the foregoing method embodiment 3.

When the apparatus is a network device, the transceiver 1705 is configured to perform the method performed by the network device in step 701 to step 703 in the foregoing method embodiment 1, is further configured to perform the method performed by the network device in step 1001 and step 1002 in the foregoing method embodiment 2, is further configured to perform the method performed by the network device in step 1301 to step 1303 in the foregoing method embodiment 3, and is further configured to perform the method performed by the network device in step 1601 and step 1602 in the foregoing method embodiment 4.

The apparatus has a function of implementing the terminal described in embodiments of this disclosure. For example, the apparatus includes a corresponding module, unit, or means (means) used for the terminal to perform the steps of the terminal that are described in embodiments of this disclosure. The function, the unit, or the means (means) may be implemented by software or hardware, or may be implemented by hardware executing corresponding software, or may be implemented by a combination of software and hardware.

Optionally, the modules in the apparatus in this embodiment of this disclosure may be configured to perform the methods performed by the terminal in the foregoing method embodiments.

As shown in FIG. 18, the apparatus 1800 includes a receiving module 1801 and a sending module 1802.

In a first optional embodiment:
The sending module 1802 is configured to send a first channel state information report in a first time unit.

The sending module 1802 is further configured to send a second channel state information report in a second time unit. When a reference signal exists between the first time unit and the second time unit, and the reference signal is on a second frequency domain resource and is within an active time of the second frequency domain resource, the second channel state information report includes channel state information of the second frequency domain resource.

When a reference signal exists between the first time unit and the second time unit, and the reference signal is on a second frequency domain resource and is beyond an active time of the second frequency domain resource, or when no reference signal exists between the first time unit and the second time unit, the second channel state information report does not include channel state information of the second frequency domain resource.

A first frequency domain resource corresponds to a first DRX parameter, the second frequency domain resource corresponds to a second DRX parameter, and the active time of the second frequency domain resource is determined based on the second DRX parameter.

The first time unit and the second time unit are adjacent time units in which channel state information reports are reported, and the first time unit is earlier than the second time unit.

Optionally, the receiving module 1801 is configured to receive first configuration information sent by a network device, where the first configuration information is used to configure the first DRX parameter and the second DRX parameter.

Optionally, the channel state information, included in the second channel state information report, of the second frequency domain resource is channel state information obtained based on last measurement performed on the second frequency domain resource before the second time unit.

In a second optional embodiment:
The receiving module 1801 is configured to receive first configuration information sent by a network device, where the first configuration information is used to configure a first DRX parameter of a first frequency domain resource and a second DRX parameter of a second frequency domain resource.

The sending module 1802 is configured to send a third channel state information report in a third time unit. When a fourth channel state information report has been sent in a fourth time unit and the fourth channel state information report includes channel state information of the second frequency domain resource, the third channel state information report does not include channel state information of the second frequency domain resource, where the fourth time unit is earlier than the third time unit, and the fourth time unit and the third time unit are in a same DRX cycle.

When a fourth channel state information report has been sent in a fourth time unit and the fourth channel state information report does not include channel state information of the second frequency domain resource, or when the third time unit is the 1^{st} time unit, in the DRX cycle, in which a channel state information report is reported, the third channel state information report includes channel state information of the second frequency domain resource.

Optionally, the third time unit is beyond an active time of the second frequency domain resource, the active time of the second frequency domain resource is determined based on the second DRX parameter, the third time unit is within an active time of the first frequency domain resource, and the active time of the first frequency domain resource is determined based on the first DRX parameter.

Optionally, the channel state information, included in the third channel state information report, of the second frequency domain resource is channel state information obtained based on last measurement performed on the second frequency domain resource before the third time unit.

In a third optional embodiment:
The receiving module 1801 is configured to receive first configuration information sent by a network device, where the first configuration information is used to configure a first DRX parameter of a first frequency domain resource and a second DRX parameter of a second frequency domain resource.

The receiving module 1801 is further configured to receive a reference signal on the second frequency domain resource. The reference signal is within an active time of the first frequency domain resource and is beyond an active time of the second frequency domain resource. The active time of the first frequency domain resource is determined based on the first DRX parameter. The active time of the second frequency domain resource is determined based on the second DRX parameter.

Optionally, the sending module 1802 is configured to send a fifth channel state information report in a fifth time unit. The fifth channel state information report includes channel state information, obtained based on the reference signal, of the second frequency domain resource. The reference signal is a reference signal that is before the fifth time unit and that is closest to the fifth time unit.

In a fourth optional embodiment:
The receiving module 1801 is configured to receive second configuration information sent by a network device, where the second configuration information is used to indicate whether a sixth channel state information report includes channel state information of a second frequency domain resource.

The sending module 1802 is configured to send the sixth channel state information report in a sixth time unit, where the sixth time unit is beyond an active time of the second frequency domain resource. The second frequency domain resource corresponds to a second DRX parameter. The active time of the second frequency domain resource is determined based on the second DRX parameter. Whether the sixth channel state information report includes channel state information of the second frequency domain resource is indicated based on the second configuration information.

Optionally, the channel state information, included in the sixth channel state information report, of the second frequency domain resource is channel state information obtained through last measurement performed on the second frequency domain resource before the sixth time unit.

The apparatus has a function of implementing the network device described in embodiments of this disclosure. For example, the apparatus includes a corresponding module, unit, or means (means) used for the network device to perform the steps related to the network device that are described in embodiments of this disclosure. The function, the unit, or the means (means) may be implemented by software or hardware, or may be implemented by hardware executing corresponding software, or may be implemented by a combination of software and hardware.

In a first optional embodiment:
The receiving module 1801 is configured to receive a first channel state information report in a first time unit.

The receiving module 1801 is further configured to receive a second channel state information report in a second time unit. When a reference signal exists between the first time unit and the second time unit, and the reference signal is on a second frequency domain resource and is within an active time of the second frequency domain resource, the second channel state information report includes channel state information of the second frequency domain resource.

When a reference signal exists between the first time unit and the second time unit, and the reference signal is on a second frequency domain resource and is beyond an active time of the second frequency domain resource, or when no reference signal exists between the first time unit and the second time unit, the second channel state information report does not include channel state information of the second frequency domain resource.

A first frequency domain resource corresponds to a first DRX parameter, the second frequency domain resource corresponds to a second DRX parameter, and the active time of the second frequency domain resource is determined based on the second DRX parameter. The first time unit and the second time unit are adjacent time units in which channel state information reports are reported, and the first time unit is earlier than the second time unit.

In an optional implementation, the second time unit is beyond the active time of the second frequency domain resource, the second time unit is within an active time of the first frequency domain resource, and the active time of the first frequency domain resource is determined based on the first DRX parameter.

In an optional implementation, the sending module 1802 is configured to send first configuration information to the terminal, where the first configuration information is used to configure the first DRX parameter and the second DRX parameter.

In an optional implementation, the channel state information, included in the second channel state information report, of the second frequency domain resource is channel state information obtained based on last measurement performed on the second frequency domain resource before the second time unit.

In a second optional embodiment:
The sending module 1802 is configured to send first configuration information to a terminal, where the first configuration information is used to configure a first DRX parameter of a first frequency domain resource and a second DRX parameter of a second frequency domain resource.

The receiving module 1801 is further configured to receive a third channel state information report in a third time unit. When a fourth channel state information report has been sent in a fourth time unit and the fourth channel state information report includes channel state information of the second frequency domain resource, the third channel state information report does not include channel state information of the second frequency domain resource, where the fourth time unit is earlier than the third time unit, and the fourth time unit and the third time unit are in a same DRX cycle.

When a fourth channel state information report has been sent in a fourth time unit and the fourth channel state information report does not include channel state information of the second frequency domain resource, or when the third time unit is the 1^{st} time unit, in the DRX cycle, in which a channel state information report is reported, the third channel state information report includes channel state information of the second frequency domain resource.

In an optional implementation, the third time unit is beyond an active time of the second frequency domain resource, the active time of the second frequency domain resource is determined based on the second DRX parameter, the third time unit is within an active time of the first frequency domain resource, and the active time of the first frequency domain resource is determined based on the first DRX parameter.

In an optional implementation, the channel state information, included in the third channel state information report, of the second frequency domain resource is channel state information obtained based on last measurement performed on the second frequency domain resource before the third time unit.

In a third optional embodiment:
The sending module 1802 is configured to send first configuration information to a terminal, where the first configuration information is used to configure a first DRX parameter of a first frequency domain resource and a second DRX parameter of a second frequency domain resource.

The sending module 1802 is further configured to send, to the terminal, a reference signal on the second frequency domain resource. The reference signal is within an active time of the first frequency domain resource and is beyond an active time of the second frequency domain resource. The active time of the first frequency domain resource is determined based on the first DRX parameter, and the active time of the second frequency domain resource is determined based on the second DRX parameter.

In an optional implementation, the receiving module 1801 is configured to receive a fifth channel state information report in a fifth time unit. The fifth channel state information report includes channel state information, obtained based on the reference signal, of the second frequency domain resource. The reference signal is a reference signal, before the fifth time unit, that is closest to the fifth time unit.

In a fourth optional embodiment:
The sending module 1802 is configured to send second configuration information to a terminal, where the second configuration information is used to indicate whether a sixth channel state information report includes channel state information of a second frequency domain resource.

The receiving module 1801 is further configured to receive the sixth channel state information report in a sixth time unit, where the sixth time unit is beyond an active time of the second frequency domain resource. The second frequency domain resource corresponds to a second DRX parameter, and the active time of the second frequency domain resource is determined based on the second DRX parameter. Whether the sixth channel state information report includes channel state information of the second frequency domain resource is indicated based on the second configuration information.

In an optional implementation, the channel state information, included in the sixth channel state information report, of the second frequency domain resource is channel state information obtained through last measurement performed on the second frequency domain resource before the sixth time unit.

In an implementation, corresponding units included in the apparatus are respectively configured to perform corresponding operations and/or processing performed by the terminal or the network device in the examples. For example, the receiving module and the sending module are a transceiver. The transceiver has a sending function and/or a receiving function, and the transceiver may alternatively be replaced with a receiver and/or a transmitter.

In another implementation, the apparatus may be a chip or an integrated circuit. In this case, the receiving module and the sending module may be a communication interface. Optionally, the communication interface may be an input/output interface or a transceiver circuit. The input/output interface may include an input interface and an output interface. The transceiver circuit may include an input interface circuit and an output interface circuit.

This disclosure further provides a computer-readable storage medium. The computer-readable storage medium stores a computer program. When the computer program is executed by a computer, functions of the terminal in any one of the foregoing method embodiments are implemented. Alternatively, when the computer program is executed by a computer, functions of the network device in any one of the foregoing method embodiments are implemented.

This disclosure further provides a computer program product. When the computer program product is executed by a computer, functions of the terminal in any one of the foregoing method embodiments are implemented. Alternatively, when the computer program product is executed by a computer, functions of the network device in any one of the foregoing method embodiments are implemented.

With reference to the foregoing descriptions, this disclosure further provides the following embodiments.

Embodiment 1: A channel state measurement method, applied to a terminal, and including:
sending a first channel state information report in a first time unit; and
sending a second channel state information report in a second time unit, where when a reference signal exists between the first time unit and the second time unit, and the reference signal is on a second frequency domain resource and is within an active time of the second frequency domain resource, the second channel state information report includes channel state information of the second frequency domain resource; or
when a reference signal exists between the first time unit and the second time unit, and the reference signal is on a second frequency domain resource and is beyond an active time of the second frequency domain resource, or when no reference signal exists between the first time unit and the second time unit, the second channel state information report does not include channel state information of the second frequency domain resource, where
a first frequency domain resource corresponds to a first DRX parameter, the second frequency domain resource corresponds to a second DRX parameter, and the active time of the second frequency domain resource is determined based on the second DRX parameter; and
the first time unit and the second time unit are adjacent time units in which channel state information reports are reported, and the first time unit is earlier than the second time unit.

Embodiment 2: The method according to Embodiment 1, where the second time unit is beyond the active time of the second frequency domain resource, the second time unit is within an active time of the first frequency domain resource, and the active time of the first frequency domain resource is determined based on the first DRX parameter.

Embodiment 3: The method according to Embodiment 1 or 2, where the method further includes:
receiving first configuration information sent by a network device, where the first configuration information is used to configure the first DRX parameter of the first frequency domain resource and the second DRX parameter of the second frequency domain resource.

Embodiment 4: The method according to any one of Embodiments 1 to 3, where
the channel state information of the second frequency domain resource includes at least one of the following: a CQI, a PMI, an LI, an RI, a CRI, an SSBRI, an L1-RSRP, and an L1-SINR.

Embodiment 5: The method according to any one of Embodiments 1 to 4, where the channel state information, included in the second channel state information report, of the second frequency domain resource is channel state information obtained based on last measurement performed on the second frequency domain resource before the second time unit.

Embodiment 6: A channel state measurement method, applied to a terminal, and including:
receiving first configuration information sent by a network device, where the first configuration information is used to configure a first DRX parameter of a first frequency domain resource and a second DRX parameter of a second frequency domain resource; and
sending a third channel state information report in a third time unit, where when a fourth channel state information report has been sent in a fourth time unit and the fourth channel state information report includes channel state information of the second frequency domain resource, the third channel state information report does not include channel state information of the second frequency domain resource, where the fourth time unit is earlier than the third time unit, and the fourth time unit and the third time unit are in a same DRX cycle; or
when a fourth channel state information report has been sent in a fourth time unit and the fourth channel state information report does not include channel state information of the second frequency domain resource, or when the third time unit is the 1^{st} time unit, in the DRX cycle, in which a channel state information report is reported, the third channel state information report includes channel state information of the second frequency domain resource.

Embodiment 7: The method according to Embodiment 6, where the third time unit is beyond an active time of the second frequency domain resource, the active time of the second frequency domain resource is determined based on the second DRX parameter, the third time unit is within an active time of the first frequency domain resource, and the active time of the first frequency domain resource is determined based on the first DRX parameter.

Embodiment 8: The method according to Embodiment 6 or 7, where the channel state information of the second frequency domain resource includes at least one of the following: a CQI, a PMI, an LI, an RI, a CRI, an SSBRI, an L1-RSRP, and an L1-SINR.

Embodiment 9: The method according to any one of Embodiments 6 to 8, where the channel state information, included in the third channel state information report, of the second frequency domain resource is channel state information obtained based on last measurement performed on the second frequency domain resource before the third time unit.

Embodiment 10: A channel state measurement method, applied to a terminal, and including:
receiving first configuration information sent by a network device, where the first configuration information is used to configure a first DRX parameter of a first frequency domain resource and a second DRX parameter of a second frequency domain resource; and
receiving a reference signal on the second frequency domain resource, where the reference signal is within an active time of the first frequency domain resource and is beyond an active time of the second frequency domain resource, the active time of the first frequency domain resource is determined based on the first DRX parameter, and the active time of the second frequency domain resource is determined based on the second DRX parameter.

Embodiment 11: The method according to Embodiment 10, where after the receiving a reference signal on the second frequency domain resource, the method further includes:
sending a fifth channel state information report in a fifth time unit, where the fifth channel state information report includes channel state information, obtained based on the reference signal, of the second frequency domain resource, and the reference signal is a reference signal that is before the fifth time unit and that is closest to the fifth time unit.

Embodiment 12: The method according to Embodiment 10 or 11, where the channel state information of the second frequency domain resource includes at least one of the following: a CQI, a PMI, an LI, an RI, a CRI, an SSBRI, an L1-RSRP, and an L1-SINR.

Embodiment 13: A channel state measurement method, applied to a terminal, and including:
receiving second configuration information sent by a network device, where the second configuration information is used to indicate whether a sixth channel state information report includes channel state information of a second frequency domain resource; and
sending the sixth channel state information report in a sixth time unit, where the sixth time unit is beyond an active time of the second frequency domain resource, the second frequency domain resource corresponds to a second DRX parameter, the active time of the second frequency domain resource is determined based on the second DRX parameter, and whether the sixth channel state information report includes channel state information of the second frequency domain resource is indicated based on the second configuration information.

Embodiment 14: The method according to Embodiment 13, where the channel state information of the second frequency domain resource includes at least one of the following: a CQI, a PMI, an LI, an RI, a CRI, an SSBRI, an L1-RSRP, and an L1-SINR.

Embodiment 15: The method according to Embodiment 13 or 14, where the channel state information, included in the sixth channel state information report, of the second frequency domain resource is channel state information obtained through last measurement performed on the second frequency domain resource before the sixth time unit.

Embodiment 16: A terminal, including a transceiver, where
the transceiver is configured to send a first channel state information report in a first time unit; and
the transceiver is further configured to send a second channel state information report in a second time unit, where when a reference signal exists between the first time unit and the second time unit, and the reference signal is on a second frequency domain resource and is within an active time of the second frequency domain resource, the second channel state information report includes channel state information of the second frequency domain resource; or
when a reference signal exists between the first time unit and the second time unit, and the reference signal is on a second frequency domain resource and is beyond an active time of the second frequency domain resource, or when no reference signal exists between the first time unit and the second time unit, the second channel state information report does not include channel state information of the second frequency domain resource, where
a first frequency domain resource corresponds to a first DRX parameter, the second frequency domain resource corresponds to a second DRX parameter, and the active time of the second frequency domain resource is determined based on the second DRX parameter; and
the first time unit and the second time unit are adjacent time units in which channel state information reports are reported, and the first time unit is earlier than the second time unit.

Embodiment 17: The terminal according to Embodiment 16, where the second time unit is beyond the active time of the second frequency domain resource, the second time unit is within an active time of the first frequency domain resource, and the active time of the first frequency domain resource is determined based on the first DRX parameter.

Embodiment 18: The terminal according to Embodiment 16 or 17, where
the transceiver is further configured to receive first configuration information sent by a network device, where the first configuration information is used to configure the first DRX parameter of the first frequency domain resource and the second DRX parameter of the second frequency domain resource.

Embodiment 19: The terminal according to any one of Embodiments 16 to 18, where
the channel state information of the second frequency domain resource includes at least one of the following: a CQI, a PMI, an LI, an RI, a CRI, an SSBRI, an L1-RSRP, and an L1-SINR.

Embodiment 20: The terminal according to any one of Embodiments 16 to 19, where the channel state information, included in the second channel state information report, of the second frequency domain resource is channel state information obtained based on last measurement performed on the second frequency domain resource before the second time unit.

Embodiment 21: A terminal, including a transceiver, where
the transceiver is configured to receive first configuration information sent by a network device, where the first configuration information is used to configure a first DRX parameter of a first frequency domain resource and a second DRX parameter of a second frequency domain resource; and
the transceiver is further configured to send a third channel state information report in a third time unit, where when a fourth channel state information report has been sent in a fourth time unit and the fourth channel state information report includes channel state information of the second frequency domain resource, the third channel state information report does not include channel state information of the second frequency domain resource, where the fourth time unit is earlier than the third time unit, and the fourth time unit and the third time unit are in a same DRX cycle; or
when a fourth channel state information report has been sent in a fourth time unit and the fourth channel state information report does not include channel state information of the second frequency domain resource, or when the third time unit is the 1^{st} time unit, in the DRX cycle, in which a channel state information report is reported, the third channel state information report includes channel state information of the second frequency domain resource.

Embodiment 22: The terminal according to Embodiment 21, where the third time unit is beyond an active time of the second frequency domain resource, the active time of the second frequency domain resource is determined based on the second DRX parameter, the third time unit is within an active time of the first frequency domain resource, and the active time of the first frequency domain resource is determined based on the first DRX parameter.

Embodiment 23: The terminal according to Embodiment 21 or 22, where the channel state information of the second frequency domain resource includes at least one of the following: a CQI, a PMI, an LI, an RI, a CRI, an SSBRI, an L1-RSRP, and an L1-SINR.

Embodiment 24: The terminal according to any one of Embodiments 21 to 23, where the channel state information, included in the third channel state information report, of the second frequency domain resource is channel state information obtained based on last measurement performed on the second frequency domain resource before the third time unit.

Embodiment 25: A terminal, including a transceiver, where
the transceiver is configured to receive first configuration information sent by a network device, where the first configuration information is used to configure a first DRX parameter of a first frequency domain resource and a second DRX parameter of a second frequency domain resource; and
the transceiver is further configured to receive a reference signal on the second frequency domain resource, where the reference signal is within an active time of the first frequency domain resource and is beyond an active time of the second frequency domain resource, the active time of the first frequency domain resource is determined based on the first DRX parameter, and the active time of the second frequency domain resource is determined based on the second DRX parameter.

Embodiment 26: The terminal according to Embodiment 25, where
the transceiver is further configured to send a fifth channel state information report in a fifth time unit, where the fifth channel state information report includes channel state information, obtained based on the reference signal, of the second frequency domain resource, and the reference signal is a reference signal that is before the fifth time unit and that is closest to the fifth time unit.

Embodiment 27: The terminal according to Embodiment 25 or 26, where the channel state information of the second frequency domain resource includes at least one of the following: a CQI, a PMI, an LI, an RI, a CRI, an SSBRI, an L1-RSRP, and an L1-SINR.

Embodiment 28: A terminal, including a transceiver, where
the transceiver is configured to receive second configuration information sent by a network device, where the second configuration information is used to indicate whether a sixth channel state information report includes channel state information of a second frequency domain resource; and
the transceiver is further configured to send the sixth channel state information report in a sixth time unit, where the sixth time unit is beyond an active time of the second frequency domain resource, the second frequency domain resource corresponds to a second DRX parameter, the active time of the second frequency domain resource is determined based on the second DRX parameter, and whether the sixth channel state information report includes channel state information of the second frequency domain resource is indicated based on the second configuration information.

Embodiment 29: The terminal according to Embodiment 28, where the channel state information of the second frequency domain resource includes at least one of the following: a CQI, a PMI, an LI, an RI, a CRI, an SSBRI, an L1-RSRP, and an L1-SINR.

Embodiment 30: The terminal according to Embodiment 28 or 29, where the channel state information, included in the sixth channel state information report, of the second frequency domain resource is channel state information obtained through last measurement performed on the second frequency domain resource before the sixth time unit.

Embodiment 31: A communication apparatus, including a sending module and a receiving module, where
the sending module is configured to send a first channel state information report in a first time unit; and
the sending module is further configured to send a second channel state information report in a second time unit, where when a reference signal exists between the first time unit and the second time unit, and the reference signal is on a second frequency domain resource and is within an active time of the second frequency domain resource, the second channel state information report includes channel state information of the second frequency domain resource; or
when a reference signal exists between the first time unit and the second time unit, and the reference signal is on a second frequency domain resource and is beyond an active time of the second frequency domain resource, or when no reference signal exists between the first time unit and the second time unit, the second channel state information report does not include channel state information of the second frequency domain resource, where
a first frequency domain resource corresponds to a first DRX parameter, the second frequency domain resource corresponds to a second DRX parameter, and the active time of the second frequency domain resource is determined based on the second DRX parameter; and
the first time unit and the second time unit are adjacent time units in which channel state information reports are reported, and the first time unit is earlier than the second time unit.

Embodiment 32: The apparatus according to Embodiment 31, where the receiving module is configured to receive first configuration information sent by a network device, where the first configuration information is used to configure the first DRX parameter and the second DRX parameter.

Embodiment 33: The apparatus according to Embodiment 31 or 32, where the channel state information, included in the second channel state information report, of the second frequency domain resource is channel state information obtained based on last measurement performed on the second frequency domain resource before the second time unit.

Embodiment 34: A communication apparatus, including a sending module and a receiving module, where
the receiving module is configured to receive first configuration information sent by a network device, where the first configuration information is used to configure a first DRX parameter of a first frequency domain resource and a second DRX parameter of a second frequency domain resource; and
the sending module is configured to send a third channel state information report in a third time unit, where when a fourth channel state information report has been sent in a fourth time unit and the fourth channel state information report includes channel state information of the second frequency domain resource, the third channel state information report does not include channel state information of the second frequency domain resource, where the fourth time unit is earlier than the third time unit, and the fourth time unit and the third time unit are in a same DRX cycle; or
when a fourth channel state information report has been sent in a fourth time unit and the fourth channel state information report does not include channel state information of the second frequency domain resource, or when the third time unit is the 1^{st} time unit, in the DRX cycle, in which a channel state information report is reported, the third channel state information report includes channel state information of the second frequency domain resource.

Embodiment 35: The apparatus according to Embodiment 34, where the third time unit is beyond an active time of the second frequency domain resource, the active time of the second frequency domain resource is determined based on the second DRX parameter, the third time unit is within an active time of the first frequency domain resource, and the active time of the first frequency domain resource is determined based on the first DRX parameter.

Embodiment 36: The apparatus according to Embodiment 34 or 35, where the channel state information, included in the third channel state information report, of the second frequency domain resource is channel state information obtained based on last measurement performed on the second frequency domain resource before the third time unit.

Embodiment 37: A communication apparatus, including:
a receiving module, configured to receive first configuration information sent by a network device, where the first configuration information is used to configure a first DRX parameter of a first frequency domain resource and a second DRX parameter of a second frequency domain resource, and
the receiving module is further configured to receive a reference signal on the second frequency domain resource, where the reference signal is within an active time of the first frequency domain resource and is beyond an active time of the second frequency domain resource, the active time of the first frequency domain resource is determined based on the first DRX parameter, and the active time of the second frequency domain resource is determined based on the second DRX parameter.

Embodiment 38: The apparatus according to Embodiment 37, where including: a sending module, configured to send a fifth channel state information report in a fifth time unit, where the fifth channel state information report includes channel state information, obtained based on the reference signal, of the second frequency domain resource, and the reference signal is a reference signal that is before the fifth time unit and that is closest to the fifth time unit.

Embodiment 39: A communication apparatus, including a sending module and a receiving module, where
the receiving module is configured to receive second configuration information sent by a network device, where the second configuration information is used to indicate whether a sixth channel state information report includes channel state information of a second frequency domain resource; and
the sending module is configured to send the sixth channel state information report in a sixth time unit, where the sixth time unit is beyond an active time of the second frequency domain resource, the second frequency domain resource corresponds to a second DRX parameter, the active time of the second frequency domain resource is determined based on the second DRX parameter, and whether the sixth channel state information report includes channel state information of the second frequency domain resource is indicated based on the second configuration information.

Embodiment 40: The apparatus according to Embodiment 39, where the channel state information, included in the sixth channel state information report, of the second frequency domain resource is channel state information obtained through last measurement performed on the second frequency domain resource before the sixth time unit.

Embodiment 41: A computer-readable storage medium, where the computer-readable storage medium is configured to store a computer program, and when the computer program is run on a computer, the computer is enabled to perform the method according to any one of Embodiments 1 to 15.

Embodiment 42: A chip, including a processor and a communication interface, where the processor is configured to read instructions to perform the method according to any one of Embodiments 1 to 15.

Embodiment 43: A channel state measurement method, applied to a network device, where the network device receives a first channel state information report in a first time unit, and receives a second channel state information report in a second time unit, where when a reference signal exists between the first time unit and the second time unit, and the reference signal is on a second frequency domain resource and is within an active time of the second frequency domain resource, the second channel state information report includes channel state information of the second frequency domain resource; or when a reference signal exists between the first time unit and the second time unit, and the reference signal is on a second frequency domain resource and is beyond an active time of the second frequency domain resource, or when no reference signal exists between the first time unit and the second time unit, the second channel state information report does not include channel state information of the second frequency domain resource, where a first frequency domain resource corresponds to a first DRX parameter, the second frequency domain resource corresponds to a second DRX parameter, the active time of the second frequency domain resource is determined based on the second DRX parameter, the first time unit and the second time unit are adjacent time units in which channel state information reports are reported, and the first time unit is earlier than the second time unit.

Embodiment 44: A channel state measurement method, where a second time unit is beyond an active time of a second frequency domain resource, the second time unit is within an active time of a first frequency domain resource, and the active time of the first frequency domain resource is determined based on a first DRX parameter.

Embodiment 45: The method according to Embodiment 44, where a network device sends first configuration information to a terminal, and the first configuration information is used to configure the first DRX parameter of the first frequency domain resource and a second DRX parameter of the second frequency domain resource.

Embodiment 46: The method according to Embodiment 44 or 45, where channel state information of the second frequency domain resource includes at least one of the following measurement items: a CQI, a PMI, an LI, an RI, a CRI, an SSBRI, an L1-RSRP, and an L1-SINR.

Embodiment 47: The method according to any one of Embodiments 44 to 46, where channel state information, included in a second channel state information report, of the second frequency domain resource is channel state information obtained based on last measurement performed on the second frequency domain resource before the second time unit.

Embodiment 48: A channel state measurement method, applied to a network device, where the network device sends first configuration information to a terminal, where the first configuration information is used to configure a first DRX parameter of a first frequency domain resource and a second DRX parameter of a second frequency domain resource; and the network device receives a third channel state information report in a third time unit, where when a fourth channel state information report has been sent in a fourth time unit and the fourth channel state information report includes channel state information of the second frequency domain resource, the third channel state information report does not include channel state information of the second frequency domain resource, where the fourth time unit is earlier than the third time unit, and the fourth time unit and the third time unit are in a same DRX cycle; or when a fourth channel state information report has been sent in a fourth time unit and the fourth channel state information report does not include channel state information of the second frequency domain resource, or when the third time unit is the 1^{st} time unit, in the DRX cycle, in which a channel state information report is reported, the third channel state information report includes channel state information of the second frequency domain resource.

Embodiment 49: The method according to Embodiment 48, where the third time unit is beyond an active time of the second frequency domain resource, the active time of the second frequency domain resource is determined based on the second DRX parameter, the third time unit is within an active time of the first frequency domain resource, and the active time of the first frequency domain resource is determined based on the first DRX parameter.

Embodiment 50: The method according to Embodiment 48 or 49, where the channel state information of the second frequency domain resource includes at least one of the following measurement items: a CQI, a PMI, an LI, an RI, a CRI, an SSBRI, an L1-RSRP, and an L1-SINR.

Embodiment 51: The method according to any one of Embodiments 48 to 50, where the channel state information, included in the third channel state information report, of the second frequency domain resource is channel state information obtained based on last measurement performed on the second frequency domain resource before the third time unit.

Embodiment 52: A channel state measurement method, applied to a network device, where the network device sends first configuration information to a terminal, where the first configuration information is used to configure a first DRX parameter of a first frequency domain resource and a second DRX parameter of a second frequency domain resource; and then the network device sends, to the terminal, a reference signal on the second frequency domain resource, where the reference signal is within an active time of the first frequency domain resource and is beyond an active time of the second frequency domain resource, so that the terminal receives the reference signal, the active time of the first frequency domain resource is determined based on the first DRX parameter, and the active time of the second frequency domain resource is determined based on the second DRX parameter.

Embodiment 53: The method according to Embodiment 52, where after the sending a reference signal on a second frequency domain resource to a terminal, the method further includes: receiving, by the network device, a fifth channel state information report in a fifth time unit, where the fifth channel state information report includes channel state information of the second frequency domain resource that is obtained based on the reference signal, and the reference signal is a reference signal that is before the fifth time unit and that is closest to the fifth time unit.

Embodiment 54: The method according to Embodiment 52 or 53, where the channel state information of the second frequency domain resource includes at least one of the following measurement items: a CQI, a PMI, an LI, an RI, a CRI, an SSBRI, an L1-RSRP, and an L1-SINR.

Embodiment 55: A channel state measurement method, applied to a network device, where the network device sends second configuration information to a terminal, where the second configuration information is used to indicate whether a sixth channel state information report includes channel state information of a second frequency domain resource; and the network device receives, in a sixth time unit, the sixth channel state information report sent by the terminal, where the sixth time unit is beyond an active time of the second frequency domain resource, the second frequency domain resource corresponds to a second DRX parameter, the active time of the second frequency domain resource is determined based on the second DRX parameter, and whether the sixth channel state information report includes channel state information of the second frequency domain resource is indicated based on the second configuration information.

Embodiment 56: The method according to Embodiment 55, where the channel state information of the second frequency domain resource includes at least one of the following measurement items: a CQI, a PMI, an LI, an RI, a CRI, an SSBRI, an L1-RSRP, and an L1-SINR.

Embodiment 57: The method according to Embodiment 55 or 56, where the channel state information, included in the sixth channel state information report, of the second frequency domain resource is channel state information obtained through last measurement performed on the second frequency domain resource before the sixth time unit.

Embodiment 58: A network device, including a transceiver, where
the transceiver is configured to receive a first channel state information report in a first time unit; and
the transceiver is further configured to receive a second channel state information report in a second time unit, where when a reference signal exists between the first time unit and the second time unit, and the reference signal is on a second frequency domain resource and is within an active time of the second frequency domain resource, the second channel state information report includes channel state information of the second frequency domain resource; or
when a reference signal exists between the first time unit and the second time unit, and the reference signal is on a second frequency domain resource and is beyond an active time of the second frequency domain resource, or when no reference signal exists between the first time unit and the second time unit, the second channel state information report does not include channel state information of the second frequency domain resource, where
a first frequency domain resource corresponds to a first DRX parameter, the second frequency domain resource corresponds to a second DRX parameter, the active time of the second frequency domain resource is determined based on the second DRX parameter, the first time unit and the second time unit are adjacent time units in which channel state information reports are reported, and the first time unit is earlier than the second time unit.

Embodiment 59: The network device according to Embodiment 58, where the second time unit is beyond the active time of the second frequency domain resource, the second time unit is within an active time of the first frequency domain resource, and the active time of the first frequency domain resource is determined based on the first DRX parameter.

Embodiment 60: The network device according to Embodiment 58 or 59, where the transceiver is further configured to send first configuration information to a terminal, where the first configuration information is used to configure the first DRX parameter and the second DRX parameter.

Embodiment 61: The network device according to any one of Embodiments 58 to 60, where the channel state information of the second frequency domain resource includes at least one of the following: a CQI, a PMI, an LI, an RI, a CRI, an SSBRI, an L1-RSRP, and an L1-SINR.

Embodiment 62: The network device according to any one of Embodiments 58 to 61, where the channel state information, included in the second channel state information report, of the second frequency domain resource is channel state information obtained based on last measurement performed on the second frequency domain resource before the second time unit.

Embodiment 63: A network device, including a transceiver, where
the transceiver is configured to send first configuration information to a terminal, where the first configuration information is used to configure a first DRX parameter of a first frequency domain resource and a second DRX parameter of a second frequency domain resource; and
the transceiver is further configured to receive a third channel state information report in a third time unit, where when a fourth channel state information report has been sent in a fourth time unit and the fourth channel state information report includes channel state information of the second frequency domain resource, the third channel state information report does not include channel state information of the second frequency domain resource, where the fourth time unit is earlier than the third time unit, and the fourth time unit and the third time unit are in a same DRX cycle; or
when a fourth channel state information report has been sent in a fourth time unit and the fourth channel state information report does not include channel state information of the second frequency domain resource, or when the third time unit is the 1^{st} time unit, in the DRX cycle, in which a channel state information report is reported, the third channel state information report includes channel state information of the second frequency domain resource.

Embodiment 64: The network device according to Embodiment 63, where the third time unit is beyond an active time of the second frequency domain resource, the active time of the second frequency domain resource is determined based on the second DRX parameter, the third time unit is within an active time of the first frequency domain resource, and the active time of the first frequency domain resource is determined based on the first DRX parameter.

Embodiment 65: The network device according to Embodiment 63 or 64, where the channel state information of the second frequency domain resource includes at least one of the following: a CQI, a PMI, an LI, an RI, a CRI, an SSBRI, an L1-RSRP, and an L1-SINR.

Embodiment 66: The network device according to any one of Embodiments 63 to 65, where the channel state information, included in the third channel state information report, of the second frequency domain resource is channel state information obtained based on last measurement performed on the second frequency domain resource before the third time unit.

Embodiment 67: A network device, including a transceiver, where
the transceiver is configured to send first configuration information to a terminal, where the first configuration information is used to configure a first DRX parameter of a first frequency domain resource and a second DRX parameter of a second frequency domain resource; and
the transceiver is further configured to send, to the terminal, a reference signal on the second frequency domain resource, where the reference signal is within an active time of the first frequency domain resource and is beyond an active time of the second frequency domain resource, the active time of the first frequency domain resource is determined based on the first DRX parameter, and the active time of the second frequency domain resource is determined based on the second DRX parameter.

Embodiment 68: The network device according to Embodiment 67, where the transceiver is further configured to receive a fifth channel state information report in a fifth time unit, where the fifth channel state information report includes channel state information, obtained based on the reference signal, of the second frequency domain resource, and the reference signal is a reference signal that is before the fifth time unit and that is closest to the fifth time unit.

Embodiment 69: The network device according to Embodiment 67 or 68, where the channel state information of the second frequency domain resource includes at least one of the following: a CQI, a PMI, an LI, an RI, a CRI, an SSBRI, an L1-RSRP, and an L1-SINR.

Embodiment 70: A network device, including a transceiver, where
the transceiver is configured to send second configuration information to a terminal, where the second configuration information is used to indicate whether a sixth channel state information report includes channel state information of a second frequency domain resource; and
the transceiver is further configured to receive the sixth channel state information report in a sixth time unit, where the sixth time unit is beyond an active time of the second frequency domain resource, the second frequency domain resource corresponds to a second DRX parameter, the active time of the second frequency domain resource is determined based on the second DRX parameter, and whether the sixth channel state information report includes channel state information of the second frequency domain resource is indicated based on the second configuration information.

Embodiment 71: The network device according to Embodiment 70, where the channel state information of the second frequency domain resource includes at least one of the following: a CQI, a PMI, an LI, an RI, a CRI, an SSBRI, an L1-RSRP, and an L1-SINR.

Embodiment 72: The network device according to Embodiment 70 or 71, where the channel state information, included in the sixth channel state information report, of the second frequency domain resource is channel state information obtained through last measurement performed on the second frequency domain resource before the sixth time unit.

Embodiment 73: A communication apparatus, including:
a receiving module, configured to receive a first channel state information report in a first time unit, where
the receiving module is further configured to receive a second channel state information report in a second time unit, where when a reference signal exists between the first time unit and the second time unit, and the reference signal is on a second frequency domain resource and is within an active time of the second frequency domain resource, the second channel state information report includes channel state information of the second frequency domain resource; or
when a reference signal exists between the first time unit and the second time unit, and the reference signal is on a second frequency domain resource and is beyond an active time of the second frequency domain resource, or when no reference signal exists between the first time unit and the second time unit, the second channel state information report does not include channel state information of the second frequency domain resource, where
a first frequency domain resource corresponds to a first DRX parameter, the second frequency domain resource corresponds to a second DRX parameter, the active time of the second frequency domain resource is determined based on the second DRX parameter, the first time unit and the second time unit are adjacent time units in which channel state information reports are reported, and the first time unit is earlier than the second time unit.

Embodiment 74: The apparatus according to Embodiment 73, where the second time unit is beyond the active time of the second frequency domain resource, the second time unit is within an active time of the first frequency domain resource, and the active time of the first frequency domain resource is determined based on the first DRX parameter.

Embodiment 75: The apparatus according to Embodiment 73 or 74, where including a sending module, configured to send first configuration information to a terminal, where the first configuration information is used to configure the first DRX parameter and the second DRX parameter.

Embodiment 76: The apparatus according to any one of Embodiments 73 to 75, where channel state information, included in a second channel state information report, of the second frequency domain resource is channel state information obtained based on last measurement performed on the second frequency domain resource before the second time unit.

Embodiment 77: A communication apparatus, including:
a sending module, configured to send first configuration information to a terminal, where the first configuration information is used to configure a first DRX parameter of a first frequency domain resource and a second DRX parameter of a second frequency domain resource; and
a receiving module, configured to receive a third channel state information report in a third time unit, where when a fourth channel state information report has been sent in a fourth time unit and the fourth channel state information report includes channel state information of the second frequency domain resource, the third channel state information report does not include channel state information of the second frequency domain resource, where the fourth time unit is earlier than the third time unit, and the fourth time unit and the third time unit are in a same DRX cycle; or
when a fourth channel state information report has been sent in a fourth time unit and the fourth channel state information report does not include channel state information of the second frequency domain resource, or when the third time unit is the 1^{st} time unit, in the DRX cycle, in which a channel state information report is reported, the third channel state information report includes channel state information of the second frequency domain resource.

Embodiment 78: The apparatus according to Embodiment 77, where the third time unit is beyond an active time of the second frequency domain resource, the active time of the second frequency domain resource is determined based on the second DRX parameter, the third time unit is within an active time of the first frequency domain resource, and the active time of the first frequency domain resource is determined based on the first DRX parameter.

Embodiment 79: The apparatus according to Embodiment 77 or 78, where the channel state information, included in the third channel state information report, of the second frequency domain resource is channel state information obtained based on last measurement performed on the second frequency domain resource before the third time unit.

Embodiment 80: A communication apparatus, including:
a sending module, configured to send first configuration information to a terminal, where the first configuration information is used to configure a first DRX parameter of a first frequency domain resource and a second DRX parameter of a second frequency domain resource, where
the sending module is further configured to send, to the terminal, a reference signal on the second frequency domain resource, where the reference signal is within an active time of the first frequency domain resource and is beyond an active time of the second frequency domain resource, the active time of the first frequency domain resource is determined based on the first DRX parameter, and the active time of the second frequency domain resource is determined based on the second DRX parameter.

Embodiment 81: The apparatus according to Embodiment 80, where including a receiving module, configured to receive a fifth channel state information report in a fifth time unit, where the fifth channel state information report includes channel state information, obtained based on the reference signal, of the second frequency domain resource, and the reference signal is a reference signal that is before the fifth time unit and that is closest to the fifth time unit.

Embodiment 82: A communication apparatus, including:
a sending module, configured to send second configuration information to a terminal, where the second configuration information is used to indicate whether a sixth channel state information report includes channel state information of a second frequency domain resource; and
a receiving module, configured to receive the sixth channel state information report in a sixth time unit, where the sixth time unit is beyond an active time of the second frequency domain resource, the second frequency domain resource corresponds to a second DRX parameter, the active time of the second frequency domain resource is determined based on the second DRX parameter, and whether the sixth channel state information report includes channel state information of the second frequency domain resource is indicated based on the second configuration information.

Embodiment 83: The apparatus according to Embodiment 82, where the channel state information of the second frequency domain resource includes at least one of the following: a CQI, a PMI, an LI, an RI, a CRI, an SSBRI, an L1-RSRP, and an L1-SINR.

Embodiment 84: A computer-readable storage medium, where the computer-readable storage medium is configured to store a computer program, and when the computer program is run on a computer, the computer is enabled to perform the method according to any one of Embodiments 43 to 57.

Embodiment 85: A chip, including a processor and a communication interface, where the processor is configured to read instructions to enable the computer to perform the method according to any one of Embodiments 43 to 57.

Embodiment 86: A communication system, where the communication system includes a terminal and a network device.

The terminal is configured to send a first channel state information report to the network device in a first time unit, and send a second channel state information report to the network device in a second time unit. When a reference signal exists between the first time unit and the second time unit, and the reference signal is on a second frequency domain resource and is within an active time of the second frequency domain resource, the second channel state information report includes channel state information of the second frequency domain resource; or when a reference signal exists between the first time unit and the second time unit, and the reference signal is on a second frequency domain resource and is beyond an active time of the second frequency domain resource, or when no reference signal exists between the first time unit and the second time unit, the second channel state information report does not include channel state information of the second frequency domain resource. A first frequency domain resource corresponds to a first DRX parameter, the second frequency domain resource corresponds to a second DRX parameter, and the active time of the second frequency domain resource is determined based on the second DRX parameter. The first time unit and the second time unit are adjacent time units in which channel state information reports are reported, and the first time unit is earlier than the second time unit.

The network device is configured to receive the first channel state information report in the first time unit, and receive the second channel state information report in the second time unit.

Embodiment 87: The communication system according to Embodiment 86, where the second time unit is beyond the active time of the second frequency domain resource, the second time unit is within an active time of the first frequency domain resource, and the active time of the first frequency domain resource is determined based on the first DRX parameter.

Embodiment 88: The communication system according to Embodiment 86 or 87, where
the terminal is further configured to receive first configuration information sent by the network device, where the first configuration information is used to configure the first DRX parameter of the first frequency domain resource and the second DRX parameter of the second frequency domain resource.

Embodiment 89: The communication system according to any one of Embodiments 86 to 88, where the channel state information of the second frequency domain resource includes at least one of the following: a CQI, a PMI, an LI, an RI, a CRI, an SSBRI, an L1-RSRP, and an L1-SINR.

Embodiment 90: The communication system according to any one of Embodiments 86 to 89, where the channel state information, included in the second channel state information report, of the second frequency domain resource is channel state information obtained based on last measurement performed on the second frequency domain resource before the second time unit.

Embodiment 91: A communication system, including a terminal and a network device.

The terminal is configured to receive first configuration information sent by the network device, where the first configuration information is used to configure a first DRX parameter of a first frequency domain resource and a second DRX parameter of a second frequency domain resource.

The terminal is further configured to send a third channel state information report in a third time unit. When a fourth channel state information report has been sent in a fourth time unit and the fourth channel state information report includes channel state information of the second frequency domain resource, the third channel state information report does not include channel state information of the second frequency domain resource, where the fourth time unit is earlier than the third time unit, and the fourth time unit and the third time unit are in a same DRX cycle.

When a fourth channel state information report has been sent in a fourth time unit and the fourth channel state information report does not include channel state information of the second frequency domain resource, or when the third time unit is the 1^{st} time unit, in the DRX cycle, in which a channel state information report is reported, the third channel state information report includes channel state information of the second frequency domain resource.

The network device is configured to send the first configuration information, and is further configured to receive the third channel state information report in the third time unit.

Embodiment 92: The communication system according to Embodiment 91, where the third time unit is beyond an active time of the second frequency domain resource, the active time of the second frequency domain resource is determined based on the second DRX parameter, the third time unit is within an active time of the first frequency domain resource, and the active time of the first frequency domain resource is determined based on the first DRX parameter.

Embodiment 93: The communication system according to Embodiment 91 or 92, where the channel state information of the second frequency domain resource includes at least one of the following: a CQI, a PMI, an LI, an RI, a CRI, an SSBRI, an L1-RSRP, and an L1-SINR.

Embodiment 94: The communication system according to any one of Embodiments 91 to 93, where the channel state information, included in the third channel state information report, of the second frequency domain resource is channel state information obtained based on last measurement performed on the second frequency domain resource before the third time unit.

Embodiment 95: A communication system, where the communication system includes a terminal and a network device.

The terminal is configured to receive first configuration information sent by the network device, where the first configuration information is used to configure a first DRX parameter of a first frequency domain resource and a second DRX parameter of a second frequency domain resource.

The terminal is further configured to receive a reference signal on the second frequency domain resource. The reference signal is within an active time of the first frequency domain resource and is beyond an active time of the second frequency domain resource. The active time of the first frequency domain resource is determined based on the first DRX parameter. The active time of the second frequency domain resource is determined based on the second DRX parameter.

The network device is configured to send the first configuration information, and send the reference signal on the second frequency domain resource.

Embodiment 96: The communication system according to Embodiment 95, where
the terminal is further configured to send a fifth channel state information report in a fifth time unit, where the fifth channel state information report includes channel state information, obtained based on the reference signal, of the second frequency domain resource, and the reference signal is a reference signal that is before the fifth time unit and that is closest to the fifth time unit; and
the network device is further configured to receive the fifth channel state information report in the fifth time unit.

Embodiment 97: The communication system according to Embodiment 95 or 96, where the channel state information of the second frequency domain resource includes at least one of the following: a CQI, a PMI, an LI, an RI, a CRI, an SSBRI, an L1-RSRP, and an L1-SINR.

Embodiment 98: A communication system, where the communication system includes a terminal and a network device.

The terminal is configured to receive second configuration information sent by a network device, where the second configuration information is used to indicate whether a sixth channel state information report includes channel state information of a second frequency domain resource.

The terminal is further configured to send the sixth channel state information report in a sixth time unit, where the sixth time unit is beyond an active time of the second frequency domain resource. The second frequency domain resource corresponds to a second DRX parameter, and the active time of the second frequency domain resource is determined based on the second DRX parameter. Whether the sixth channel state information report includes channel state information of the second frequency domain resource is indicated based on the second configuration information.

The network device is configured to send the second configuration information to the terminal, and is further configured to receive the sixth channel state information report in the sixth time unit.

Embodiment 99: The communication system according to Embodiment 98, where the channel state information of the second frequency domain resource includes at least one of the following: a CQI, a PMI, an LI, an RI, a CRI, an SSBRI, an L1-RSRP, and an L1-SINR.

Embodiment 100: The communication system according to Embodiment 98 or 99, where the channel state information, included in the sixth channel state information report, of the second frequency domain resource is channel state information obtained through last measurement performed on the second frequency domain resource before the sixth time unit.

It may be understood that "an embodiment" mentioned in the entire specification means that particular features, structures, or characteristics related to the embodiment are included in at least one embodiment of this disclosure. Therefore, embodiments in the entire specification do not necessarily refer to a same embodiment. In addition, these particular features, structures, or characteristics may be combined in one or more embodiments in any appropriate manner. It may be understood that sequence numbers of the foregoing processes do not mean an execution sequence in various embodiments of this disclosure. The execution sequence of the processes should be determined based on functions and internal logic of the processes, and should not be construed as any limitation on the implementation processes of embodiments of this disclosure.

It should be understood that, in this disclosure, "when" and "if' mean that an apparatus performs corresponding processing in an objective situation, and are not intended to limit time. The terms do not mean that the apparatus is required to have a determining action during implementation, and do not mean any other limitation.

In this disclosure, an element represented in a singular form is intended to represent "one or more", but does not represent "one and only one", unless otherwise specified. In this disclosure, unless otherwise specified, "at least one" is intended to represent "one or more", and "a plurality of" is intended to represent "two or more".

It may be clearly understood by persons skilled in the art that, for the purpose of convenient and brief description, for a detailed operating process of the foregoing system, apparatus, and unit, refer to a corresponding process in the foregoing method embodiments, and details are not described herein again.

In several embodiments provided in this disclosure, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the shown or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts shown as units may or may not be physical units, may be located in one place, or may be distributed on a plurality of network units. Some or all of the units may be selected according to an actual requirement to achieve objectives of solutions of embodiments.

In addition, functional units in embodiments of this disclosure may be integrated into one processing unit, each of the units may exist alone physically, or two or more units may be integrated into one unit. The integrated unit may be implemented in a form of hardware, or may be implemented in a form of a software functional unit.

In conclusion, the foregoing embodiments are merely intended for describing technical solutions of this disclosure, but not for limiting this disclosure. Although this disclosure is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this disclosure.

## Claims

1. A channel state measurement method, applied to a terminal and comprising:
sending a first channel state information report in a first time unit; and
sending a second channel state information report in a second time unit, wherein when a reference signal exists between the first time unit and the second time unit, and the reference signal is on a second frequency domain resource and is within an active time of the second frequency domain resource, the second channel state information report comprises channel state information of the second frequency domain resource; or
when a reference signal exists between the first time unit and the second time unit, and the reference signal is on a second frequency domain resource and is beyond an active time of the second frequency domain resource, or when no reference signal exists between the first time unit and the second time unit, the second channel state information report does not comprise channel state information of the second frequency domain resource, wherein
a first frequency domain resource corresponds to a first discontinuous reception DRX parameter, the second frequency domain resource corresponds to a second DRX parameter, and the active time of the second frequency domain resource is determined based on the second DRX parameter; and
the first time unit and the second time unit are adjacent time units in which channel state information reports are reported, and the first time unit is earlier than the second time unit.

2. The method according to claim 1, wherein the second time unit is beyond the active time of the second frequency domain resource, the second time unit is within an active time of the first frequency domain resource, and the active time of the first frequency domain resource is determined based on the first DRX parameter.

3. The method according to claim 1 or 2, wherein the method further comprises:
receiving first configuration information sent by a network device, wherein the first configuration information is used to configure the first DRX parameter of the first frequency resource and the second DRX parameter of the second frequency domain resource.

4. The method according to any one of claims 1 to 3, wherein the channel state information of the second frequency domain resource comprises at least one of the following: a channel quality indicator CQI, a precoding matrix indicator PMI, a layer indicator LI, a rank indicator RI, a channel state information-reference signal resource indicator CRI, a synchronization signal block resource indicator SSBRI, layer 1-reference signal received power L1-RSRP, and a layer 1-signal to interference plus noise ratio L1-SINR.

5. The method according to any one of claims 1 to 4, wherein the channel state information, comprised in the second channel state information report, of the second frequency domain resource is channel state information obtained based on last measurement performed on the second frequency domain resource before the second time unit.

6. A channel state measurement method, applied to a terminal and comprising:
receiving first configuration information sent by a network device, wherein the first configuration information is used to configure a first DRX parameter of a first frequency domain resource and a second DRX parameter of a second frequency domain resource; and
sending a third channel state information report in a third time unit, wherein when a fourth channel state information report has been sent in a fourth time unit and the fourth channel state information report comprises channel state information of the second frequency domain resource, the third channel state information report does not comprise channel state information of the second frequency domain resource, wherein the fourth time unit is earlier than the third time unit, and the fourth time unit and the third time unit are in a same DRX cycle; or
when a fourth channel state information report has been sent in a fourth time unit and the fourth channel state information report does not comprise channel state information of the second frequency domain resource, or when the third time unit is the 1^{st} time unit, in the DRX cycle, in which a channel state information report is reported, the third channel state information report comprises channel state information of the second frequency domain resource.

7. The method according to claim 6, wherein the third time unit is beyond an active time of the second frequency domain resource, the active time of the second frequency domain resource is determined based on the second DRX parameter, the third time unit is within an active time of the first frequency domain resource, and the active time of the first frequency domain resource is determined based on the first DRX parameter.

8. The method according to claim 6 or 7, wherein the channel state information, comprised in the third channel state information report, of the second frequency domain resource is channel state information obtained based on last measurement performed on the second frequency domain resource before the third time unit.

9. A channel state measurement method, applied to a terminal and comprising:
receiving first configuration information sent by a network device, wherein the first configuration information is used to configure a first DRX parameter of a first frequency domain resource and a second DRX parameter of a second frequency domain resource; and
receiving a reference signal on the second frequency domain resource, wherein the reference signal is within an active time of the first frequency domain resource and is beyond an active time of the second frequency domain resource, the active time of the first frequency domain resource is determined based on the first DRX parameter, and the active time of the second frequency domain resource is determined based on the second DRX parameter.

10. The method according to claim 9, wherein after the receiving a reference signal on the second frequency domain resource, the method further comprises:
sending a fifth channel state information report in a fifth time unit, wherein the fifth channel state information report comprises channel state information, obtained based on the reference signal, of the second frequency domain resource, and the reference signal is a reference signal that is before the fifth time unit and that is closest to the fifth time unit.

11. A channel state measurement method, applied to a terminal and comprising:
receiving second configuration information sent by a network device, wherein the second configuration information is used to indicate whether a sixth channel state information report comprises channel state information of a second frequency domain resource; and
sending the sixth channel state information report in a sixth time unit, wherein the sixth time unit is beyond an active time of the second frequency domain resource, the second frequency domain resource corresponds to a second DRX parameter, the active time of the second frequency domain resource is determined based on the second DRX parameter, and whether the sixth channel state information report comprises channel state information of the second frequency domain resource is indicated based on the second configuration information.

12. The method according to claim 11, wherein the channel state information, comprised in the sixth channel state information report, of the second frequency domain resource is channel state information obtained through last measurement performed on the second frequency domain resource before the sixth time unit.

13. A terminal, comprising a transceiver, wherein
the transceiver is configured to send a first channel state information report in a first time unit; and
the transceiver is further configured to send a second channel state information report in a second time unit, wherein when a reference signal exists between the first time unit and the second time unit, and the reference signal is on a second frequency domain resource and is within an active time of the second frequency domain resource, the second channel state information report comprises channel state information of the second frequency domain resource; or
when a reference signal exists between the first time unit and the second time unit, and the reference signal is on a second frequency domain resource and is beyond an active time of the second frequency domain resource, or when no reference signal exists between the first time unit and the second time unit, the second channel state information report does not comprise channel state information of the second frequency domain resource, wherein
a first frequency domain resource corresponds to a first DRX parameter, the second frequency domain resource corresponds to a second DRX parameter, and the active time of the second frequency domain resource is determined based on the second DRX parameter; and
the first time unit and the second time unit are adjacent time units in which channel state information reports are reported, and the first time unit is earlier than the second time unit.

14. The terminal according to claim 13, wherein the second time unit is beyond the active time of the second frequency domain resource, the second time unit is within an active time of the first frequency domain resource, and the active time of the first frequency domain resource is determined based on the first DRX parameter.

15. The terminal according to claim 13 or 14, wherein the channel state information, comprised in the second channel state information report, of the second frequency domain resource is channel state information obtained based on last measurement performed on the second frequency domain resource before the second time unit.

16. A terminal, comprising a transceiver, wherein
the transceiver is configured to receive first configuration information sent by a network device, wherein the first configuration information is used to configure a first DRX parameter of a first frequency domain resource and a second DRX parameter of a second frequency domain resource; and
the transceiver is further configured to send a third channel state information report in a third time unit, wherein when a fourth channel state information report has been sent in a fourth time unit and the fourth channel state information report comprises channel state information of the second frequency domain resource, the third channel state information report does not comprise channel state information of the second frequency domain resource, wherein the fourth time unit is earlier than the third time unit, and the fourth time unit and the third time unit are in a same DRX cycle; or
when a fourth channel state information report has been sent in a fourth time unit and the fourth channel state information report does not comprise channel state information of the second frequency domain resource, or when the third time unit is the 1^{st} time unit, in the DRX cycle, in which a channel state information report is reported, the third channel state information report comprises channel state information of the second frequency domain resource.

17. A terminal, comprising a transceiver, wherein
the transceiver is configured to receive first configuration information sent by a network device, wherein the first configuration information is used to configure a first DRX parameter of a first frequency domain resource and a second DRX parameter of a second frequency domain resource; and
the transceiver is further configured to receive a reference signal on the second frequency domain resource, wherein the reference signal is within an active time of the first frequency domain resource and is beyond an active time of the second frequency domain resource, the active time of the first frequency domain resource is determined based on the first DRX parameter, and the active time of the second frequency domain resource is determined based on the second DRX parameter.

18. The terminal according to claim 17, wherein
the transceiver is further configured to send a fifth channel state information report in a fifth time unit, wherein the fifth channel state information report comprises channel state information, obtained based on the reference signal, of the second frequency domain resource, and the reference signal is a reference signal that is before the fifth time unit and that is closest to the fifth time unit.

19. A terminal, comprising a transceiver, wherein
the transceiver is configured to receive second configuration information sent by a network device, wherein the second configuration information is used to indicate whether a sixth channel state information report comprises channel state information of a second frequency domain resource; and
the transceiver is further configured to send the sixth channel state information report in a sixth time unit, wherein the sixth time unit is beyond an active time of the second frequency domain resource, the second frequency domain resource corresponds to a second DRX parameter, the active time of the second frequency domain resource is determined based on the second DRX parameter, and whether the sixth channel state information report comprises channel state information of the second frequency domain resource is indicated based on the second configuration information.

20. A computer-readable storage medium, wherein the computer-readable storage medium stores a computer program, and when the computer program runs on a computer, the computer is enabled to perform the method according to any one of claims 1 to 12.

21. A chip, comprising a processor and a communication interface, wherein the processor is configured to read instructions to perform the method according to any one of claims 1 to 12.
